(19) Europäisches Patentamt
European Patent Office
Office européen des brevets

(11) **EP 2 203 004 B1**

(12) **EUROPEAN PATENT SPECIFICATION**

(45) Date of publication and mention
of the grant of the patent:
**21.12.2011 Bulletin 2011/51**

(51) Int Cl.:
**H04W 8/00** (2009.01)

(21) Application number: **08173030.1**

(22) Date of filing: **29.12.2008**

(54) **Method and apparatus for determining a distribution of neighbour nodes around a first node in a communication network**

Verfahren und Vorrichtung zur Bestimmung der Verteilung von benachbarten Knoten rund um einen ersten Knoten in einem Kommunikationsnetzwerk

Procédé et appareil pour déterminer une distribution de noeuds voisins autour d'un premier noeud dans un réseau de communication

(84) Designated Contracting States:
**DE FR IT NL**

(43) Date of publication of application:
**30.06.2010 Bulletin 2010/26**

(73) Proprietor: **Hitachi, Ltd.**
**Chiyoda-ku**
**Tokyo 100-8280 (JP)**

(72) Inventors:
• **Lin, Lan**
**06400, Cannes (FR)**
• **Lenardi, Massimiliano**
**06660 Antibes (FR)**
• **Menouar, Hamid**
**06220 Golfe Juan (FR)**
• **Mariyasagayam, Nestor**
**91400 Orsay (FR)**

(74) Representative: **MERH-IP**
**Matias Erny Reichl Hoffmann**
**Paul-Heyse-Strasse 29**
**80336 München (DE)**

(56) References cited:
**US-A1- 2007 198 140    US-A1- 2008 194 204**

• **LOCHERT C ET AL: "GEOGRAPHIC ROUTING IN CITY SCENARIOS" MOBILE COMPUTING AND COMMUNICATIONS REVIEW, ACM, NEW YORK, NY, US, vol. 9, no. 1, 1 January 2005 (2005-01-01), pages 69-72, XP001504821 ISSN: 1091-1669**
• **JING ZHAO ET AL: "VADD: Vehicle-Assisted Data Delivery in Vehicular Ad Hoc Networks" IEEE TRANSACTIONS ON VEHICULAR TECHNOLOGY, IEEE SERVICE CENTER, PISCATAWAY, NJ, US, vol. 57, no. 3, 1 May 2008 (2008-05-01), pages 1910-1922, XP011201788 ISSN: 0018-9545**

## Description

### Technical Field of the Invention

The present invention relates to a method and an apparatus for determining a distribution of neighbour nodes around a first node in a communication network, where beacon signals, which are respectively transmitted from one or more neighbour nodes located in a beaconing range of a first node, are received at the first node and, wherein each beacon signal transmitted from one of the neighbour nodes comprises identification data which identifies the respective neighbour node and position data which indicates the position of the respective neighbour node.

In particular, the present invention relates to a wireless communication network of a plurality of network nodes, wherein some, most or all of the network nodes are mobile nodes.

The present invention particularly relates to the technology of Vehicular **A**d hoc **NET**works, in the following referred to as VANET.

The work leading to this invention has received funding form the European Community's Seventh Framework Programme (FP7/2007-2013) under grant agreement n° 224644.

### Background of the Invention

VANET technologies have become hot topic in the communication research community. VANET is an autonomous network in which network nodes can act as server, client and relay for communication among a plurality of VANET nodes, wherein most of the nodes of the VANET correspond to vehicles (or are mounted on vehicles). Due to various issues such as high mobility, large scale network etc, VANET requires specific research and technologies to be developed.

Basically, three main categories of applications are enabled by VANET, including road safety (e.g. collision avoidance, intersection safety, etc.), traffic efficiency (traffic jam information, roadwork information, etc.), and so-called infotainment (internet connection, vehicle diagnostics, etc).

According to very important aspects in VANET applications, there exists the scenario that packets containing messages, data or information shall be forwarded to a required target region within the road network or to one or more mobile and/or stationary target nodes of the VANET located in a specific target region, the target region being represented by a target destination. When a node of the VANET receives such a packet or has already stored the packet, but the node cannot directly send the packet to the target destination since it is outside the sending range of the node, i.e. when the transmission distance is beyond the direct radio communication range, the node shall select a forwarding node upon the nodes in its vicinity to forward the packet. Accordingly, in common VANET systems, packets can be relayed between different intermediate vehicles/nodes towards the target destination in order to forward the packet, i.e. the intended transmission, in steps to the intended target destination. This is sometimes referred to as multi-hop communication. It may occur that the packet shall be transmitted to the target destination within a required latency.

In such scenarios, the communication mechanism of the VANET shall cope with different situations such as large network scale, long transmission distance to the target destination, network congestion due to a large amount of packets and/or nodes, and a loose network having a low density of nodes, in particular at an introduction stage of the VANET system.

An efficient selection of the forwarding nodes (the intermediate nodes) of the transmission in multi-hop communication has become a hot topic in the VANET routing research community. Especially, relay nodes shall be selected as efficiently as possible in order to improve the transmission success rates. In particular in an urban environment, a road network can be complex. In such an environment, it is crucial that relay vehicles or, respectively, forwarding nodes are selected such that the packet is efficiently forwarded to the target destination.

In particular, geo-location based routing is one of the most important topics to be developed and improved in VANET systems for the above-mentioned information dissemination. According to geo-location based routing, application related information or other information may be required to be transmitted to a specific geographic location or specific regions in the traffic system having a network of roads, wherein intermediate nodes, for example mobile vehicles as nodes travelling in the traffic system or network of roads, shall relay the respective packet towards the target destinations.

Among known geo-routing protocols, a distance based selection of forwarding nodes is widely used and has been discussed in the prior art, i.e. a node of the VANET that is geographically closest to the target destination shall be selected as the next forwarding node.

However, in such a scenario there occurs a problem that due to the complexity of road network topology, a road section in which the node, which is selected as forwarding node, is located does not necessarily lead towards the target destination because of a complex structure of the road network. Especially in complicated environments such as an urban road network topology, such a distance based forwarding selection might encounter ineffectiveness and results in low success rates in forwarding the message or packet to the target destination.

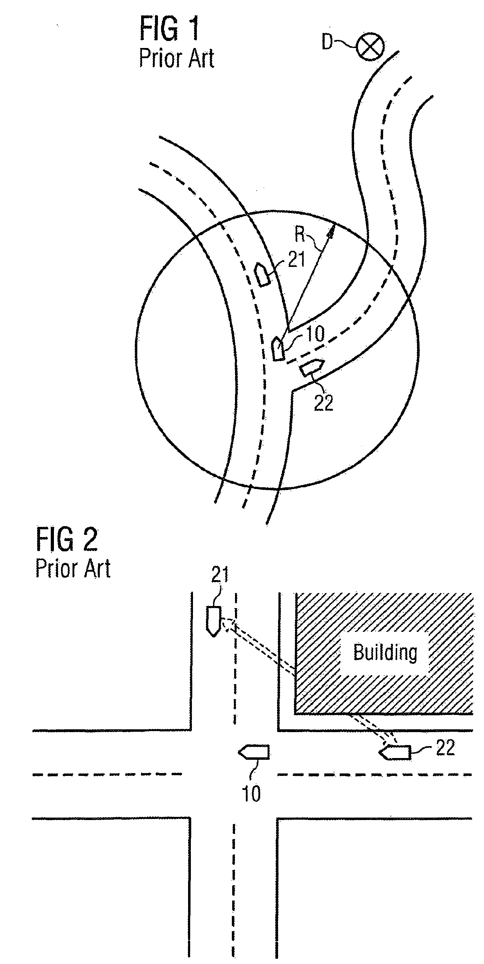

In the paper of Jing Zhao and Guohong Cao; "VADD: Vehicle-Assisted Data Delivery in vehicular ad-hoc networks" (INFOCOM 2006, 25th IEEE International Conference on Computer Communications, Proceedings, April 2006, pages 1 to 12, see also Vehicular Technology, IEEE Transactions on Volume 57, Issue 3, May 2008, pages 1910 to 1922), this issue is discussed. The occurring problem is illustrated in Fig. 1 which shows a relatively simple road topology with a target destination D to which a packet shall be forwarded within the VANET. A first vehicle as a first node 10 of the VANET has stored or recently received the packet and shall now select a next forwarding node in the VANET. As illustrated in Fig. 1, two vehicles which are nodes 21 and 22 of the VANET are currently located in the range of the first node 10 within a radius R. The travelling direction of the respective nodes 10, 22, and 22 is indicated by the tip of the vehicles in Fig. 1. In a distance based forwarding selection, the first node 10 selects node 21 as the next forwarding node to transmit the message or packet to node 21 since it is located closer to the target destination D than node 22. However, as can be seen in Fig. 1, due to the road topology, the node 22 should have been selected as forwarding node rather than node 21 to make sure that the packet may be forwarded to the target destination D.

More precisely, the road topology is not taken into account in distance based forwarding node selection so that the node 21 may be selected in preference to node 22, since node 21 is currently located geographically closer to the target destination D. However, node 21 is actually not heading towards the target destination D in the example of Fig. 1 due to the road topology, and node 22 may have clearly been the more efficient forwarding node to be selected for forwarding the packet to the target destination D, or it would even have been required to select node 22 as a forwarding node in order to make sure that the packet can be forwarded to the target destination D at all.

To cope with the above-mentioned problem, "VADD: Vehicle-Assisted Data Delivery in vehicular ad-hoc networks" proposes to utilize a GIS (Geo-Information System) or a map database configured for routing purposes in forwarding node selection. Each node is proposed to know exactly its own location in relation to the road network or road network topology. A forwarding node may then be selected based on the knowledge about the road network topology and the position of the node within the road network topology.

The idea of integrating a map database for networking purposes has become a new trend in geo-routing research. However, although the above-mentioned method might result in a precise routing, some issues and problems do occur as will be discussed in the following.

First of all, the above-mentioned solution requires the vehicles, i.e. the network nodes, to be equipped with navigation systems in addition to the VANET communication system, thereby causing extra costs for the system and increasing difficulties in system deployment.

Second of all, even in the case that a navigation system is provided so as to be available, a map database and a GIS is purely relating to application layer data of the USI-layers (Open System Interconnection, e.g. according to the OSI reference model). Consequently, in order to utilize a map database and/or GIS information for network routing purposes, strong cross layer functions between OSI-layers must be implemented to provide an interface from the map database or GIS layer to the network layer.

Finally, by introducing such an interface, the workload of the network layer will be significantly increased due to the complexity of the map database or the GIS.

US 2007/0198140 A1 shows a VANET routing protocol and an inter-vehicle communication system, wherein the routing protocol does not utilize a map database or GIS information. The routing protocol is described for the case in that a message is required to be sent towards a specific traffic direction. Each vehicle of the VANET is described to keep its position trace during a certain time interval, and shall send the trace information to vehicles/nodes in its vicinity.

At a receiver side, the receiving vehicle compares the received trace with its own trace to detect if the respective two vehicles (sending and receiving vehicle) are driving in the same traffic direction in order to make the forwarding selection or forwarding decision. When a message needs to be sent to a target destination in a downstream traffic direction from point of view of a sending vehicle that shall transmit the message towards a target destination, the node performs the forwarding decision based on the trace information received from other VANET nodes.

However, according to such a method, the trace information, which includes historical movement information, needs to be sent, thus, resulting in a large message size of messages to be sent. Furthermore, a comparison of trace information might be mistaken in complicated road network topologies such as for example in a curve or turn, in particular, if the sending vehicle makes a turn into a link at an intersection which is not leading towards the target destination. When this vehicle then sends its trace information to neighbouring vehicles, a vehicle with a similar trace or trace information may be selected as forwarding node, which will result in a wrong forwarding direction not leading to the target destination. Furthermore, the process of sending such trace information is different from a beaconing function according to which instant position data of nodes is sent by the VANET nodes themselves, such a beaconing function being a common basic function of VANET systems.

In C. Lochert et al. "Geographic Routing in City Scenarios" (published in ACM SIGMOBILE Mobile Computing and Communications Review (MC2R) 9 (1), pages 69 to 72, January 2005), another geo-location based routing protocol has been proposed for forwarding node selection without utilizing a map database or GIS information. A road network is proposed to be divided into intersections, wherein nodes located at the intersections are referred to as coordinators, which shall make a decision to which direction the message shall be forwarded from the intersection. In order to determine, whether a vehicle is to be considered as a coordinator or not, two approaches have been proposed as will be described in the following.

According to the first approach, each node does not only send its own beacon signals according to a basic VANET beaconing function, i.e. comprising its own position data, but additionally send the respective position data of its neighbour nodes, i.e. the nodes in its beaconing range, from which beacon signals have been received. At a receiver side, a node consequently receives its neighbour node's position data according to the basic beaconing function of VANET as well as additionally the position data of the respective neighbour nodes of its neighbour nodes, i.e. the neighbour nodes' neighbour nodes. By then comparing information received from different neighbour nodes, it may be possible to determine that a respective node is a coordinator, i.e. that it is located at an intersection as described with reference to Fig. 2.

As shown in Fig. 2, even though two neighbour nodes 21 and 22 of a receiving vehicle as a first node 10 are respectively located in each other's beaconing range, they do not "see" each other, i.e. recognize each other as neighbour nodes because they do not receive each other's beacon signals. Therefore, it might be assumed that these two nodes are possibly hidden and blocked to each other by a corner of an intersection, for example caused by a building at the corner of the intersection as shown in Fig. 2 and the node 10 can be considered as a coordinator node.

According to the above-mentioned method, it is additionally required that the position data of neighbour nodes is sent as the payload of a beacon signal. Consequently, such a beaconing function is unfavourable compared the basic beaconing function of VANET that is widely accepted in the research and development community.

Furthermore, the determination of a coordinator according to the above-mentioned method might cause misjudgements in some situations such as situations in which nodes are blocked by e.g. big-size trucks rather than a corner of an intersection.

According to the second approach described in C. Lochert et al. "Geographic Routing in City Scenarios", a correlation coefficient is calculated for each node. However, according to such an approach, it may only be reliably determined, whether or not all neighbour nodes are located within a region which follows a substantially straight line. Therefore, it may not be reliably determined, whether a node is located at an intersection, within a curved road topology, or in another complex local road network topology, which may also lead to misjudgements as in the above-mentioned approach.

Furthermore, VANET nodes may in general be considered as moving sensors (besides the possibility of some stationary nodes in the VANET). By communicating with each other, each or at least most of the nodes of the VANET shall be able to detect immediate or potential dangerous situations on the road or in the road network. This applies even to nodes which are not equipped with a navigation system, map database or GIS.

Such an event-driven detection of immediate or potential dangerous situations requires highly dynamic, real time or quasi real time information dissemination. The transmission of dangerous situation information dissemination is required to meet very high time constraints. For example, in the USA-VSC-project, it is defined that an accident warning message shall be transmitted a distance of 400 meters within 0.3 seconds. Under such circumstances, the VANET cannot rely on a common centralized infrastructure for detecting and disseminating such information about dangerous situations, whereas such a centralized method is nowadays commonly utilized by service providers to provided traffic related information to on-board navigation systems of vehicles which are nodes in a VANET. Hereby, all traffic information and safety related information is collected at a traffic centre, therefore referred to as a centralized method. Such a traffic centre detects the on-road traffic situation by analysing detected traffic information and other safety related information, and the results of the centralized analysis are then transmitted to final users. Such a centralized method is, however, not suitable to detect dangerous situations dynamically, neither is it possible to disseminate the information within the above-mentioned tight time constraints.

US 2008/194204 A1 shows an array antenna that is utilized to enhance the adaptive acquisition capability of a communication connection with one or more wireless subscribers. Subscribers who are located outside the omnidirectional range of the array antenna are acquired by using adaptive beamforming techniques to create an acquisition beam dedicated to acquiring new connections with wireless subscribers. The acquisition beam may sweep through the coverage of the array antenna seeking subscribers who lie beyond the omni range of the array antenna, but fall within the acquisition range using adaptive beamforming.

## Summary of the Invention

An object of the present invention is to solve the above-mentioned problems of the prior art. Furthermore, it is an object of the present invention to provide a reliable and efficient method for determining a distribution of neighbour nodes around a first node in a communication network and to provide an apparatus configured to perform the method.

To solve the above-mentioned objects, a method for determining a distribution of neighbour nodes around a first node in a communication network according to claim 1 and an apparatus for determining a distribution of neighbour nodes around a first node in a communication network according to claim 13 are proposed. Preferred embodiments of the present invention are described in the dependent claims.

According to the present invention, a method for determining a distribution of neighbour nodes around a first node in a communication network, comprises the steps of

receiving, at the first node, beacon signals which are respectively transmitted from one or more neighbour nodes located in a beaconing range of the first node, wherein the beacon signal transmitted from a neighbour node comprises identification data which identifies the respective neighbour node and position data which indicates the position of the respective neighbour node;

rotating a scan area about the center of a circular area, wherein the scan area is a partial area of the circular area having the first node in the center, wherein the scan area has a predetermined scan view shape and extends from the center of the circular area to at least the circumference of the circular area in a defined radial direction from the center of the circular area; and/or

determining an angular distribution of neighbour nodes located in the beaconing range of the first node by counting the number of neighbour nodes located within the scan area while rotating the scan area, based on the position data of the neighbour nodes, as a function of a radial direction of the scan area from the center of the circular area.

According to the above-described structure, an angular distribution of neighbour nodes located in the beaconing range of the first node can be determined by utilizing the basic beaconing function of VANET. No additional utilization of map database or GIS information is required. Furthermore, since all nodes of VANET will at least utilize a basic beaconing function, the proposed method is able to appropriately evaluate data from all available neighbour nodes. Furthermore, by utilizing the basic beaconing function, no new sources of additional payload to be transmitted between nodes have to be introduced.

The radius of the circular area may be a predetermined radius. It may correspond to the beaconing range of the first node so that the circular area covers the area surrounding the first node, i.e. corresponds to the beaconing range coverage. Since the beaconing range may be dynamically changed in VANET depending on different situations or requirements, also the radius of the circular area may be dynamically changed e.g. in accordance with changes of the beaconing range.

By rotating the scan area about the center of the circular area, the circular area may be scanned, preferably, in a virtual scanning process of systematically evaluating received data.

The scan-view shape of the scan area may be an ellipse, wherein the width of the scan-view shape preferably corresponds to a width of a road in the road network or an average width of a road in the road network, if the road network has streets/roads of different width so that the scan area is configured to cover a road of the road network within the beaconing range. The scan view-shape may also be a piece of a pie or any geometrical shape that allows defining a radial direction from the circular area, to cover a road in the beaconing range, and to be rotated about a center of the circular area.

The step of rotating a scan area about the center of a circular area may be carried out discretely by successive rotations by a discrete rotational angle until the scan area is rotated at least by a complete rotation of 360°. The rotation may, however, also be carried out continuously. The rotation may be carried out clockwise or counter-clockwise. If the rotation is carried out discretely, the discrete rotational angle may be constant and/or a unit fraction of 360°. The discrete rotational angle may also be a function of the radial direction, e.g. dependent on a travelling direction of the first node.

Preferably, the beacon signals, which are respectively transmitted from the neighbour nodes, may further comprise time stamp data which indicates a specific time, wherein the position data comprised in the beacon signal may indicate the position of the respective neighbour node at the specific time indicated by the time stamp data.

Based on the time stamp data, it becomes possible to indicate the respective specific time when the corresponding position data of the neighbour node has been determined. Consequently, it becomes possible to determine, whether the data of the received beacon signal is up-to-date, based on a comparison of the actual time with the special time as indicated by the corresponding time stamp.

Preferably, the position data of the respective neighbour node may be discarded from being considered in the step of determining an angular distribution of neighbour nodes, when a time interval longer than or equal to a predetermined time interval has elapsed since the specific time indicated by the respective time stamp data.

This makes it possible to discard data of beacon signals that are not sufficiently up-to-date anymore in order to achieve an optimal up-to-date determination of the current node distribution. If the sequence of steps of the method of determining a node distribution is periodically repeated, the predetermined time interval may equal to or smaller than a reciprocal value of a repeating frequency of repeating the sequence of the above-mentioned steps. Or, it may correspond to a reciprocal value of a beaconing rate, if the neighbour nodes periodically send beacon signals at the beaconing rate.

Preferably, one or more of the neighbour nodes may periodically transmit beacon signals with respectively updated position data and updated time stamp data.

This makes it possible that the first node periodically receives up-to-date beacon signals so that a determination of the current node distribution in the vicinity of the first node may be carried out periodically or on demand, when required by VANET applications.

In a case in which the first node has periodically received a plurality of beacon signals from the same neighbour node within the predetermined time interval, preferably only the position data of the beacon signal from said same neighbour node having the time stamp data which indicates the latest respective specific time may be used for the step of determining the angular distribution of neighbour nodes.

According to this aspect of the present invention, it is avoided that a neighbor node is double-counted and that the data which is more up-to-date is used in the determination of the angular distribution of neighbour nodes. Thus, double-counting may be avoided for one specific determination process. However, discarding data from a specific determination process may not correspond to discarding the data from the system memory since the data may be used in other applications.

Preferably, the first node may periodically repeat the steps of rotating the scan area and determining the angular distribution of neighbour nodes to determine periodically updated angular distributions of neighbour nodes,

According to this aspect of the present invention, the sequence of steps of the method for determining an angular distribution of neighbour nodes is repeated periodically. This allows for a continuous determination of the local road network topology. The frequency of periodically repeating the sequence of steps may be the same as the beaconing rate of the neighbour nodes or different. The frequency of repeating the sequence of steps from receiving beacon signals to determining the angular distribution of the neighbour nodes may be a predetermined constant frequency or depend on a change rate of the network topology, e.g. depending on an average speed of the first node and/or the mobile nodes in the network or in the vicinity of the first node, and/or the density of neighbour nodes in the vicinity of the first node. Generally, the frequency of periodically repeating the sequence of steps of the method for determining an angular distribution should be higher, if the network topology changes fast, e.g. due to a high velocity of the first node and/or the neighbour nodes.

Further, the sequence of steps of receiving beacon signals, rotating the scan area, and determining an angular distribution of neighbour nodes may be repeated periodically and/or on demand (i.e. when required in a current situation, i.e. to carry out a specific VANET application) in case a current distribution of neighbour nodes has to be determined taking into account data of newly received beacon signals.

Preferably, the method may further comprise the steps of:

identifying peaks of the number of neighbour nodes in the determined angular distribution of neighbour nodes;
determining a number of identified peaks of the number of neighbour nodes in the determined angular distribution of neighbour nodes to determine a number of links in the vicinity of the first node;
determining radial directions of the identified peaks based on the determined angular distribution of neighbour nodes; and/or
determining, if the first node is located at an intersection of a plurality of links or in the middle of a link based on the determined number of identified peaks.

According to this aspect of the present invention, it becomes possible to evaluate a determined angular distribution of neighbour nodes and to determine the: road topology in the vicinity of the first node based on this evaluation of the angular distribution without utilizing a map database or GIS data. Especially, it becomes possible to determine, whether the first node is currently located at an intersection or in a link between two intersections. It becomes possible to identify links of the road network and determine, which of the neighbour nodes is located in which of the identified links.

Furthermore, according to the above-mentioned aspect of the present invention, if it is determined that the first node is located at an intersection, this determination has a high reliability because the determination does not rely on only one specific neighbour node, but on the whole geographic distribution on all neighbour nodes.

Furthermore, in the case of a determination that the first node is located at an intersection, the position of the intersection and the respective road topology of the intersection, comprising the number of links of the intersection and the respective link directions and/or link angles may be transmitted to neighbour nodes to inform the other nodes of the intersection as well as its topology.

In a case in which it is determined that the first node is located in the middle of a link so that the position of the first node divides the link in two sub links, the method may preferably further comprise the step of determining which of the two sub links is the downstream sub link located downstream of the first node and which of the two sub links is the upstream sub link located upstream of the first node based on the angles between the direction of the velocity of the first node and the directions of the two sub links determined from the radial directions of the identified peaks corresponding to the sub links.

According to this aspect of the present invention, it becomes possible to determine, which of two sub links is the sub link located upstream of the first node and which of two sub links is the sub link located downstream of the first node, in addition to the determination of the directions of the sub links.

In a case in which it is determined that the first node is located in the middle of a link so that the position of the first node divides the link in two sub links, the method may preferably further comprise the step of

determining a sub link angle, which is the angle between the directions of the two sub links, based on the angle between of the radial directions of the identified peaks in the determined angular distribution of neighbour nodes which correspond to the two sub links.

According to this aspect of the present invention, it becomes possible to determine the angle between two sub links. If the first node is located in a turn between two sub links, the first node may detect that it is currently located in a turn and may further even determine an angle of the turn, i.e. the angle between the two sub links, while travelling along a link.

In a case in which it is determined that the first node (10) is located at an intersection having at least three links merging into each other, the method may preferably further comprise the step of

- determining at least one link angle of the intersection, the link angle being the angle between the directions of two adjacent links that merge at the intersection, based on the angle between the radial directions of the identified peaks (P1, P2, P3, P4) in the determined angular distribution of neighbour nodes (21, 22, 23, 24) which correspond to the links merging at the intersection.

According to this aspect of the present invention, it becomes possible to determine the angle between two adjacent links at an intersection. If the first node is located at an intersection, the first node may determine a respective angle between all adjacent pairs of detected links at the intersection.

In a case in which the determined sub link angle, a determined link angle, or generally an angle between the directions of two identified peaks is below a predetermined first threshold value or above a predetermined second threshold value, the first nod may preferably transmit a warning signal to the neighbour nodes to indicate a dangerous turn or a dangerous link angle at an intersection and/or to warn about the dangerous turn or the dangerous link angle at an intersection.

According to this aspect of the present invention, the first node may determine a dangerous turn based on a determined sub link angle by determining, whether the sub link angle is below a predetermined first threshold value or above a predetermined second threshold value, depending on the definition of angles; wherein measuring relative angles between sub links up to a maximal value only leads to the requirement of a first dangerous turn threshold value, but a measurement of angles up to 360° leads to the requirement of the bigger second threshold value. Preferably, the second threshold value is 360° minus the first threshold value.

The sub link angle information may be combined with other sensor data for a detection of other dangerous situations and a warning signal concerning the detected dangerous situation can be transmitted for the first node to other nodes being informed of the link angle information by the first node to indicate a dangerous situation.

Generally, a relative angle between the sub links being below a first threshold value indicates that the turn may be dangerous. If the first node detects a dangerous turn, the neighbour nodes in the vicinity may be warned by sending the warning signal so that road safety may be improved and accidents may be prevented. The warning information may be combined with the detected road topology in the warning signal, i.e. the detected relative angle between the sub links may be transmitted to receiving nodes with the signal so that receiving nodes and/or vehicles may make appropriate decisions with regard to the detected situation.

Furthermore, also in a case in which it is determined that the first node is located at an intersection, where the number of identified peaks is higher than two, a detected intersection topology, i.e. the detected positions of the peaks, may be preferably made available for VANET applications at the first node and/or may be sent to other nodes, i.e. mobile nodes such as other vehicles and/or road side units. The determined intersection topology information may help to judge potential crossing points of different vehicles in order to avoid dangerous situations. Then, VANET intersection applications can be realized even without a map database or GIS data. Furthermore, abnormal situations may be detected at the intersection, e.g. a link angle between two adjacent links of the intersection below or above a link angle threshold, similar to situations as described with regard to a dangerous turn detection, and further, a corresponding warning signal may be generated to be transmitted to neighbour nodes. The detected intersection topology may be combined with the warning information in the warning signal, i.e. the detected topology may be transmitted with the signal so that receiving nodes and/or vehicles may make appropriate decisions with regard to the detected abnormal situation.

Preferably, the beacon signals received from the one or more neighbour nodes may further comprise velocity data indicating the speed and/or the velocity direction of the respective neighbour nodes at the specific time indicated by the time stamp data, wherein the method may further comprise the step of determining a respective traffic direction of at least one mobile neighbour node of the one or more neighbour nodes to determine, if said at least one mobile neighbour node is travelling in a same traffic direction or an opposite traffic direction as the first node based on the angle between the velocity direction of the first node and the velocity direction of the at least one mobile neighbour node and/or based on the angle between the velocity direction of the at least one mobile neighbour node and at least one of the upstream sub link direction and the downstream sub link direction.

According to this aspect of the present invention, it becomes possible to estimate the flow of the network nodes in the vicinity of the first node, i.e. which of the neighbour nodes travel in a same traffic direction and which in an opposite direction.

In a case in which a packet shall be transmitted to one or more target nodes, the target nodes being nodes of the communication network located at a predetermined target position and/or located within a target geographic region indicated by the target position and/or a region shape of the target geographic region, wherein the one or more target nodes are not neighbour nodes of the first node, i.e. none of the target nodes is located in the beaconing range of the first node, the method may preferably further comprise the steps of

selecting one or more of the neighbour nodes of the first node as forwarding nodes based on the determined angular distribution of neighbour nodes and the direction from the first node towards the target position; and/or

transmitting the packet from the first node to the one or more selected forwarding nodes.

According to this aspect of the present invention, an improved forwarding node selection process in multi-hop communication may be performed based on knowledge about the network topology and node distribution in the vicinity of the first node without additionally utilizing a map database or GIS data.

In a case in which the first node is determined to be located in the middle of a link and the target position is located in the direction of the downstream sub link and/or downstream of the first node, only one or more neighbour nodes which are located in the downstream sub link may be preferably selected as forwarding nodes.

According to this aspect of the present invention, the packet will be forwarded to a next forwarding node which is located closer to the target position so as to bring the packet closer to the required target destination.

Preferably, in the above-mentioned case, neighbour nodes moving in the same traffic direction as the first *node may be preferred to be selected as forwarding nodes over neighbour nodes moving in the opposite traffic direction as the first node,

According to this aspect of the present invention, the packet will be forwarded to a next forwarding node which is travelling into the direction of the target position. This is especially advantageous in a case in which the density of nodes is low and it has to be expected that the next forwarding node may not be able to immediately forward the packet to a next-to-next forwarding node but has to store the packet until it may be further forwarded. This way, the selected next forwarding node brings the packet closer to the target position caused by its travelling direction until the packet may be further forwarded.

Furthermore, in the above-mentioned case, when no neighbour node is located in the downstream link, the first node may preferably store the packet until at least one beacon signal from a neighbour node located in the downstream link of the first node is received so that the respective neighbour node may be selected as a forwarding node.

This way, the first node itself brings the packet closer to the target position caused by its travelling direction until the packet may be further forwarded.

However, in another case in which the first node is determined to be located in the middle of a link and the target position is located in the direction of the upstream sub link and/or upstream of the first node, only one or more neighbour nodes which are located in the upstream sub link may preferably be selected as forwarding nodes.

According to this aspect of the present invention, the packet will be forwarded to a next forwarding node which is located closer to the target position so as to bring the packet closer to the required target destination.

Preferably, in the above-mentioned case, neighbour nodes moving in the opposite traffic direction as the first node may be preferred to be selected as forwarding nodes over neighbour nodes moving in the same traffic direction as the first node.

According to this aspect of the present invention, the packet will be forwarded to a next forwarding node which is travelling into the direction of the target position. This is especially advantageous in a case in which the density of nodes is low and it has to be expected that the next forwarding node may not be able to immediately forward the packet to a next-to-next forwarding node but has to store the packet until it may be further forwarded. This way, the selected next forwarding node brings the packet closer to the target position caused by its travelling direction until the packet may be further forwarded.

Furthermore, in the above-mentioned another case, when no neighbour node is located in the upstream link, the first node may store the packet until at least one beacon signal from a neighbour node located in the upstream link of the first node is received so that the respective neighbour node may be selected as a forwarding node and/or until at least one beacon signal from a neighbour node located in the downstream link and moving in the opposite traffic direction than the first node is received so that the respective neighbour node may be selected as a forwarding node.

This way, the first node itself may stare the packet until a potential forwarding node becomes available in the upstream link. Furthermore, the first node may also forward the packet to a neighbour node in the downstream link, if it is travelling in the opposite traffic direction so as to forward the packet to a node that is travelling in the direction of the target position.

In yet another case in which the first node is determined to be located at an intersection of a plurality of links, the method may preferably further comprise the steps of

comparing the directions of the plurality of links determined from the radial directions of the corresponding identified peaks based on the angular distribution of identified peaks with a direction from the first node towards the target position to determine the angles between the directions of the plurality of links and the direction from the first node towards the target position; and/or

selecting at least two links of the plurality of links of the intersection as forwarding links, wherein the two links of the intersection which have the smallest angles with respect to the direction towards the target position of the target node may be selected so that at least for each of the selected forwarding links at least one neighbour node located in the respective forwarding link may preferably be selected as a forwarding node in the step of selecting a forwarding node.

According to this aspect of the present invention, an optimized forwarding node selection may be performed based on the detected road network topology, when it is determined that the first node is located at an intersection. It is possible to forward the packet into the at least two most promising links of the available forwarding directions, i.e. to forwarding nodes located in the at least two most promising links. Thus, robustness of the forwarding process may be optimized and success rates may be significantly increased. Furthermore, the forwarding node selection process may be performed by utilizing a basic beaconing function of VANET and no additional interchange of additional signals or beacons having an excessive data payload is required. Furthermore, no map database or GIS data is required.

According to the present invention, an apparatus for determining a distribution of neighbour nodes around a first node in a communication network comprises

a receiver means for receiving, at the first node, beacon signals which are respectively transmitted from one or more neighbour nodes located in the beaconing range of the first node, wherein the beacon signal transmitted from a neighbour node comprises identification data which identifies the respective neighbour node and position data which indicates the position of the respective neighbour node;

a scanning means for rotating a scan area about the center of a circular area, wherein the scan area is a partial area of the circular area having the first node in the center and having a predetermined radius, wherein the scan area has a predetermined scan view shape and extends from the center of the circular area to at least the circumference of the circular area in a defined radial direction from the center of the circular area; and/or

a distribution determining means for determining an angular distribution of neighbour nodes located in the beaconing range of the first node by counting the number of neighbour nodes located within the scan area while the scanning means rotates the scan area, based on the position data of the neighbour nodes, as a function of a radial direction of the scan area from the center of the circular area.

The apparatus may preferably further comprise means as described in the following so as to be configured to perform the steps of the above-described preferable aspects and features of the method.

Preferably, the apparatus may comprise a defining means for defining the scan area.

Preferably, the apparatus further comprises means for determining a position of the first node and determining the corresponding time stamp data. The apparatus may further comprise means for determining a velocity data of the first node comprising the speed and/or velocity direction of the first node.

Preferably, the apparatus may further comprise

a peak identifying means for identifying peaks of the number of neighbour nodes in the determined angular distribution of neighbour nodes;

a peak number determining means for determining a number of identified peaks of the number of neighbour nodes in the determined angular distribution of neighbour nodes to determine a number of links in the vicinity of the first node;

a peak position determining means for determining radial directions of the identified peaks based on the determined angular distribution of neighbour nodes; and/or

a node distribution topology determining means for determining, if the first node is located at an intersection of a plurality of links or in the middle of a link based on the determined number of identified peaks.

Preferably, the apparatus may further comprise a storage means for storing data comprised in the received beacon signals and/or storing a packet.

Preferably, the apparatus may further comprise a sub link determining means for determining which of two sub links of a link is the downstream sub link located downstream of the first node and which of the two sub links is the upstream sub link located upstream of the first node based on the angles between the direction of the velocity of the first node and the directions of the two sub links determined from the radial directions of the identified peaks corresponding to the sub links.

Preferably, the apparatus may further comprise a. sub link angle determining means for determining a sub link angle, which is the angle between the directions of two sub links of a link, based on the angle between the radial directions of the identified peaks in the determined angular distribution of neighbour nodes which correspond to the two sub links.

Preferably, the apparatus may further comprise a dangerous turn detecting means for detecting a dangerous turn in a case in which a determined sub link angle is below a predetermined first threshold value or above a predetermined second threshold value.

Preferably, the apparatus may further comprise a traffic direction determining means for determining the traffic direction of a mobile neighbour node of the one or more neighbour nodes to determine, whether said mobile neighbour node is travelling in a same traffic direction as the first node or an opposite traffic direction than the first node based on the angle between the velocity direction of the first node and the velocity direction of the mobile neighbour node.

Preferably, the apparatus may further comprise a forwarding node selecting means for selecting one or more of the neighbour nodes of the first node as forwarding nodes based on the determined angular distribution of neighbour nodes, the determined traffic directions and/or a direction from the first node to a target position to which the packet shall be transmitted, and/or a transmitting means for transmitting the packet from the first node to the one or more selected forwarding nodes.

Preferably, the apparatus may further comprise a direction comparing means for comparing the directions of the plurality of links of an intersection determined from the angular distribution of identified peaks with the direction from the first node towards a target position for determining the respective angles between the directions of the plurality of links of the intersection and the direction from the first node towards the target position.

Preferably, the direction comparing means is configured to compare all different directions so as to be able to calculate angles of directions, angle differences of two different directions among the following directions: velocity directions of the first node, velocity directions of neighbour nodes, directions of links, directions of sub links, radial peak positions, and/or a direction from the first node towards the target position.

Preferably, the apparatus may further comprise a link selecting means for selecting at least two links of the plurality of links of the intersection as forwarding links, the two links of the intersection which have the smallest angle with respect to the direction from the first node towards the target position.

The above-mentioned features and aspects of the present invention may be combined in any way, partly or as a whole.

Further aspects and advantages of the present invention will become apparent from the below detailed description of preferred embodiments of the present invention.

**Brief Description of the Figures**

Fig. 1 shows a schematic view of a local road topology for illustrating a distance based forwarding node selection in VANET systems according to the prior art.

Fig. 2 shows a schematic view of an intersection for illustrating a forwarding node selection in VANET utilizing information about neighbour nodes of neighbour nodes according to the prior art.

Fig. 3 shows a schematic view of a road having mobile and stationary VANET nodes for illustrating a basic beaconing function of VANET.

Fig. 4 shows a flow chart of a method according to an embodiment of the present invention.

Figs. 5A and 5B show a schematic view of a road having a first node and neighbour nodes for illustrating a method according to an embodiment of the present invention.

Fig. 6 shows an angular distribution of neighbour nodes by the number of neighbour nodes as a function of a radial direction, determined by a method according to an embodiment of the present invention.

Fig. 7 shows a flow chart of a method according to a further embodiment of the present invention.

Fig. 8A shows a schematic view of an intersection for illustrating a method according to a further embodiment of the present invention.

Fig. 8B shows a further schematic view of the intersection of Fig. 8A for illustrating a method according to a further embodiment of the present invention.

Fig. 8C shows an angular distribution of neighbour nodes by the number of neighbour nodes as a function of a radial direction, determined by a method according to an embodiment of the present invention for the intersection of Figs. 8A and 8B.

Fig. 9A shows a schematic view of a road having a turn for illustrating a method according to a further embodiment of the present invention.

Fig. 9B shows an angular distribution of neighbour nodes by the number of neighbour nodes as a function of a radial direction, determined by a method according to an embodiment of the present invention for the link of Fig. 9A.

Fig. 10 shows a flow chart of a method according to a. further embodiment of the present invention.

Fig. 11 shows a schematic view of an intersection for illustrating a method according to a further embodiment of the present invention.

Fig. 12 shows an apparatus for determining a distribution of neighbour nodes surrounding a first node according to a further embodiment of the present invention.

**Detailed Description of Figures and Preferred Embodiments of the Present Invention**

In the VANET R&D community, periodically sending beacon signals is widely accepted and considered as a basic VANET function and will be required as standardized prerequisite function to all VANET nodes. Consequently, in all of the following embodiments of the present invention it is assumed that a common beaconing function is provided for all nodes, mobile nodes such as vehicles and stationary nodes such as road side units in a VANET as a basic function. In the following and in the figures, same reference numerals relate to similar elements.

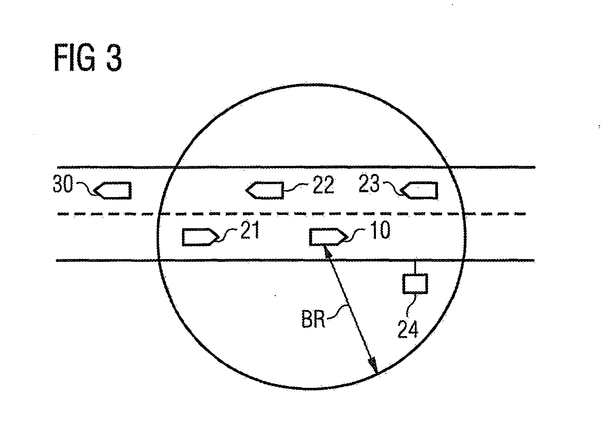

Utilizing this beaconing function, each node of the VANET periodically sends a beacon signal which is received by its neighbour nodes. Throughout this specification, a first node 10 is defined to be a node of the VANET from the receiving point of view of the nodes of the VANET. As illustrated in Fig. 3, a first node 10 periodically receives beacon signals from the neighbour nodes 21, 22, 23, and 24 which are located within the beaconing range of the first node 10 which is indicated by the circle with the first node 10 in the center having a radius BR. The neighbour nodes 21, 22, and 23 of the first node 10 are mobile nodes a.s indicated by the tip which further indicates a. travelling direction of the mobile nodes. On the other hand, neighbour node 24 is a stationary node.

Since the VANET nodes periodically send their beacon signals at a beaconing frequency (not referring to a signal frequency of a beacon signal), it is intended that a first node 10 periodically repeats the determination of the angular distribution of neighbour nodes at a repeating frequency in order to obtain current node distribution information of the dynamical node distribution in VANET systems, corresponding to a current snapshot of the node distribution. The repeating frequency of the scanning process for determining the node distribution is intended to be substantially similar to the beaconing frequency. However, the present invention is not limited to this and the frequencies can be different. The repeating frequency of the node distribution determination can also depend on a changing rate of node distribution in the VANET topology. The higher the changing rate, the higher the repeating frequency of the node distribution determination is, then, preferable.

Since the beacon signals of the neighbour nodes 21, 22, 23, and 24 comprise the identification data for identifying the respective neighbour node 21, 22, 23, or 24 and the position data for indicating the position of the respective neighbour node 21, 22, 23, or 24, the first node 10 is able to be aware of the location of its neighbour nodes 21, 22, 23, and 24.

In Fig. 3, the node 30 of the VANET is located outside of the beaconing range of the first node 10, and, therefore, the first node does not receive the beacon signal of the first node 10. All nodes of the VANET located within the beaconing range of the first node 10 are defined as neighbour nodes of the first node 10. Therefore, node 30 in Fig. 3 is not a neighbour node of the first node 10 because it is located outside of the beaconing range of the first node 10.

In the following description, a VANET beaconing function will be briefly described. The beaconing function may be considered as a periodical broadcasting process in which each node of the VANET including vehicles as mobile nodes and/or road side units (referred to as RSU in the following) as stationary nodes periodically send beacon signals to be received by its neighbour nodes, wherein from the receiving point of view all nodes of the VANET receive the respective beacon signals from its neighbour nodes as shown in Fig. 1 for a first node 10 and its neighbour nodes 21, 22, 23, and 24. Commonly, the beacon signals are periodically sent at a frequency from 1 to 10 times per second.

A beacon signal according to an embodiment of the present invention comprises identification data as an identifier of the beacon sending node and position data comprising the position information of the beacon sending node for indicating the geographic location of the beacon sending node (latitude, longitude, and/or altitude). This position information is obtained by GNSS (Global Navigation Satellite System) such as the commonly known GPS or the future GALILEO system. However, the position data is not limited to be obtained by GNSS but may be alternatively obtained by in-vehicle sensor data, from other communication systems, or even by a combination of GNSS data with in-vehicle sensor data by data fusion technologies for further improve the precision of the position data.

According to a further embodiment of the present invention, the beacon signal of a beacon sending node further comprises a time stamp data which indicates a specific time, which is the specific time at which the position of the beacon sending node is determined so that the position data indicates the position of the beacon sending node at exactly the specific time. In this embodiment, the position data is obtained by GNSS, so that the time stamp data is a satellite time stamp. However, the present invention is not limited to this embodiment and the specific time may also be obtained by time measuring means mounted in the beacon sending node. The time stamp data is utilized for a high synchronization level between nodes and for obtaining an accurate position data that can be associated with a certain specific time which is necessary in a dynamically changing distribution of nodes of the VANET due to the movement of mobile nodes.

According to the present invention, a neighbour node distribution shall be determined. The neighbour node distribution shall represent the current neighbour node distribution in the vicinity of the first node 10 as for example shown in Fig. 3. Therefore, position data of a neighbour node shall be discarded from the determination of the distribution of neighbour nodes if a time interval longer than a predetermined time interval has been elapsed since the corresponding specific time indicated by the respective time stamp data.

This can be understood from Fig. 3. Since the first node 10 and node 30 are travelling in opposite directions, the node 30 has been located within the beaconing range of the first node 10 a certain time interval ago. Therefore, previously, the first node has received one or more beacon signals from the node 30 which is not a neighbour node of the first node 10 anymore in Fig. 3. However, the position data of a last received beacon signal from the node 30 may be expected to be outdated position data because, similar to the first node 10, node 30 generally keeps on travelling. Consequently, the position data of the node 30 received in a former beacon signal from node 30 at the first node 10 shall be discarded from consideration in a determination of a current node distribution when the respective time stamp data indicates that a certain time interval above a predetermined time interval has elapsed since the position data was generated. The predetermined time interval in this embodiment substantially corresponds to the reciprocal value of the repeating frequency of the determination of a current node distribution so that position data is not used in two subsequent determination of the current node distribution. The present invention is, however, not limited to this value of the predetermined time interval.

Furthermore, it may occur that the first node 10 receives a plurality of subsequently transmitted beacon signals from a same neighbour node, especially, when the first node 10 and the respective neighbour node travel in a same or similar travelling direction as for example the first node 10 and neighbour node 21 in Fig. 3. Therefore, first position data of a first beacon signal corresponding to a first specific time received from a neighbour node 21 shall be discarded from consideration in a determination of a current node distribution, when a second position data of a second beacon signal corresponding to a second specific time is received from the same neighbour node 21, where the second specific time indicates a later time. This is especially advantageous, when a frequency of periodically sending beacon signals from the neighbour node 21 is higher that the repeating frequency of the determination of a current node distribution at the first node 10.

According to a further embodiment of the present invention, the beacon signal further comprises velocity data indicating the velocity, i.e. the speed and velocity direction, of the beacon sending node so that the velocity data comprises the information about the vector of the beacon sending node velocity, including the moving speed (speed) and the heading direction (velocity direction).

According to a further embodiment of the present invention, the beacon signal of a mobile node of the VANET further comprises basic vehicle sensor status data for indicating a status of the mobile node, respectively the vehicle being represented as the mobile node of the VANET. This basic vehicle sensor status data indicates a dynamical status of basic functions of the vehicle such as brake activities and raw rate being information about the steering direction (indicated for example by the steering wheel angle) of the mobile node. Thus, the information indicated by the basic vehicle sensor status data is suitable to observe the movement behaviour of the vehicle and to make predictions of a future behaviour of the mobile node such as travelling direction changes and speed changes. It is also suitable to be used to detect potential accidents or dangerous situations.

According to a further embodiment of the present invention, the beacon signal further comprises node type data indicating, whether the beacon sending node is a mobile node of the VANET such as a vehicle or a stationary node of the VANET such as an RSU.

When a first node 10 as shown in Fig. 3 receives beacon signals according to the above-mentioned preferred embodiments from its neighbour nodes 21, 22, 23, and 24, the first node 10 sets up a current neighbour list table in which all of its neighbour nodes 21, 22, 23, and 24 are listed together with all of the data which is comprised in the respective beacon signals. Such a table of neighbour nodes as shown below plays an important role in routing protocols (forwarding node selection), since in a case in which the first node 10 shall forward a packet or message towards a specific target destination, the first node 10 can only select one or more next forwarding nodes to which the packet shall be transmitted from the table of neighbour nodes, i.e. a next forward of transmission shall be chosen from this table of neighbour nodes.

An exemplary table of neighbour nodes 21, 22, 23, and 24 of the first node 10 is illustrated in the below Tab. 1 in accordance with Fig. 3 for the embodiment in which the beacon signal comprises identification data, position data, time stamp data, velocity data, basic vehicle sensor status data, and node type data.

Tab. 1: Table of neighbour nodes 21, 22, 23, and 24 at the first node 10

| ID | Time Stamp (hh:mm:ss UTC) | Latitude (₀,₀ N/S) | Longitude (₀,₀E/W) | Altitude (m) | Speed (m/s) | Heading (°, N) | Type (V/RSU) |
|---|---|---|---|---|---|---|---|
| 21 | xxxxxx | Xxxx,xxx, N | Xxxx,xxx, E | xxx.x | x.xx | xxx.xxx | V |
| 22 | xxxxxx | Xxxx,xxx, N | Xxxx,xxx, E | xxx.x | x.xx | xxx.xxx | V |
| 23 | xxxxxx | Xxxx,xxx, N | Xxxx,xxx, E | xxx.x | x.xx | xxx.xxx | V |
| 24 | xxxxxx | Xxxx,xxx, N | Xxxx,xxx, E | xxx.x | 0 | 0 | RSU |

In table of neighbour nodes 21, 22, 23, and 24 at the first node 10 as shown in Tab. 1, the node IDs according to the identification data of the respective beacon signals of the respective neighbour nodes 21, 22, 23, and 24 is given in the first column, the corresponding location information (latitude, longitude, and altitude) as indicated by the position data is given in the third to fifth column, the respective specific time (time stamp) indicated by the time stamp data corresponding to the respective position data is given in the second column, the respective speed and heading directions as indicated by the respective velocity information data is given in the sixth and seventh column, and the node type, V for mobile vehicles or RSU for stationary Road Side Units, as indicated by the respective node type data is given in the eighth column.

In the above table of neighbour nodes 21, 22, 23, and 24, the respective unit, by which the respective data is given, is additionally indicated in the above table, for example the speed is given in m/s. Here, the direction of a velocity vector of a mobile node is given in degrees with respect to the direction of North with clockwise turning direction (the direction of East corresponds to 90° and the direction of West corresponds to 270°). This applies throughout the description, where any vector direction is always given as the angle with respect to the direction of North in degrees by turning clockwise. However, the present invention is not limited to the units as given in the above table and also other units can be used.

In a further embodiment of the present invention, a road topology around a first node 10 is determined based on data comprised in beacon signals. For this purpose, the host vehicle determines an angular distribution of its neighbour nodes, i.e. it determines how its neighbour nodes are distributed geographically. Hereby, it is assumed that most of the vehicles which represent mobile nodes of the VANET are located in the road so that the geographical distribution of nodes reflects the geographical distribution of road sections, which will be referred to as links in the following.

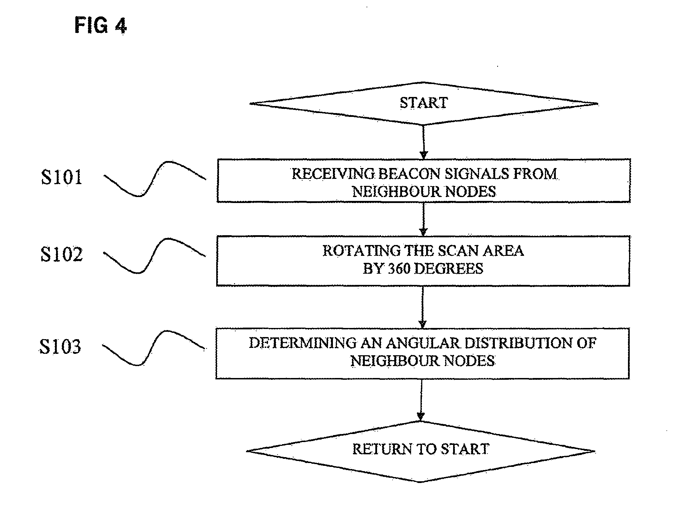

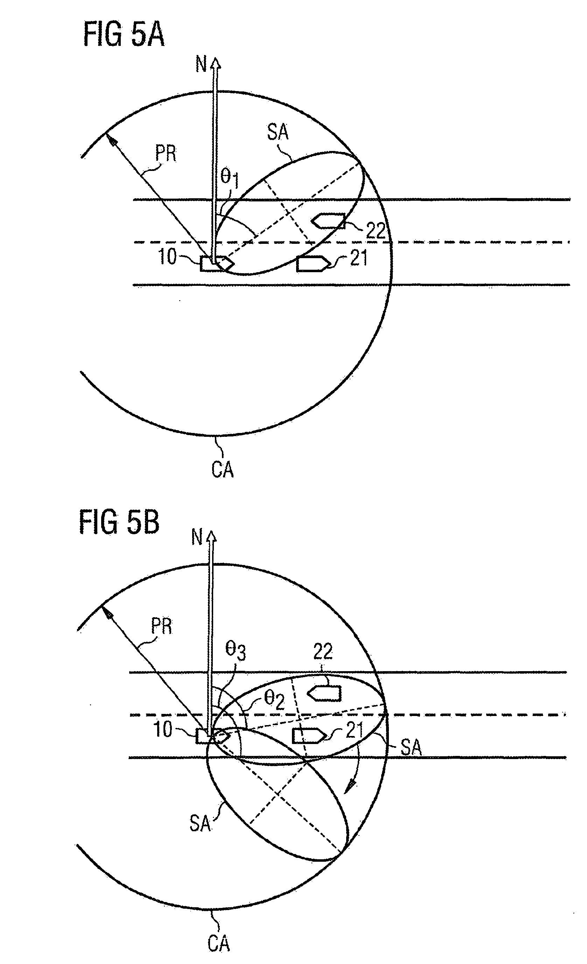

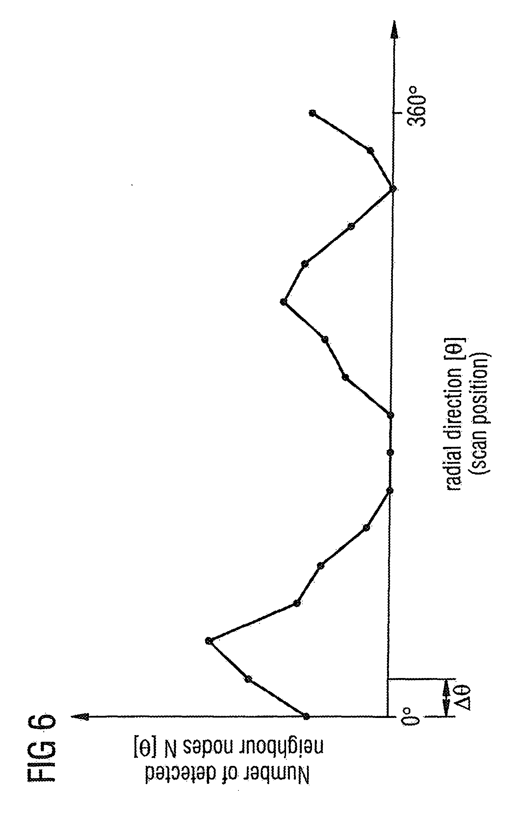

This embodiment will be first described with reference to the flow chart as shown in Fig. 4 and then with reference to the drawings in the Figs. 5A, 5B, and 6. As shown in Fig. 4, the first node 10 receives beacon signals from its neighbour nodes 21 and 22 in a step S101 of receiving beacon signals from neighbour nodes in accordance with the above-described description of the embodiments of beaconing functions.

A scan area SA is defined which is a partial area of a circular area CA having the first node 10 in the center and having a predetermined radius PR, wherein the scan area SA has a predetermined scan view shape and extends from the center of the circular area CA to at least the circumference of the circular area CA in a defined radial direction at an angle θ1 (with respect to the direction of North) from the center of the circular area CA. The relation between the scan area SA and the circular area CA is illustrated in Figs. 5A and 5B.

In the next step S102 of rotating the scan area by 360 degrees, the scan area SA is rotated about the center of the circular area CA by rotating the defined radial direction of the scan-view shape about the center of the circular area CA which corresponds to the position of the first node 10.

In this embodiment, the scan view shape is an ellipse so that the scan area SA has the shape of an ellipse which is defined by the minor axis and the major axis of the ellipse, wherein the major axis corresponds to the predetermined radius of the circular area CA and the center of the circular area CA is located and kept, while rotating the scan area SA, at the one end point of the major axis of the ellipse as illustrated in Figs. 5A and 5B, where it is shown how the scan area SA is rotated about the circular area CA in clockwise direction having a radial direction θ1 in Fig, 5A, and to further radial directions θ2 and θ3 in Fig. 5B.

Here, according to this embodiment, the radial direction of the scan area SA is defined by the direction of the major axis of the ellipse with respect to North. Furthermore, according to this embodiment, the minor axis of the ellipse is defined such that it is adjusted to substantially correspond to the width of the road in order to be able to cover the whole width of the road. However, the present invention is not limited to this embodiment, and the scan area may also be defined so as to have the shape of a circle, the shape of a piece of a cake, or any other geometric shape which may be defined so as to extend from the center of the circular area CA to at least the circumference of the circular area CA in a defined radial direction, wherein the shape and dimension of the scan area may also be dynamically adjusted, for example to the density of neighbours nodes and/or complexity of the road network topology.

In the next step S103 of determining an angular distribution of neighbour nodes, the angular distribution of the neighbour nodes 21 and 22 in the beaconing range of the first node 10 is determined by counting the number of neighbour nodes that are respectively located within the scan area SA while rotating the scan area SA, based on the position data of the neighbour nodes 21 and 22, as a function $N(\theta)$ of a radial direction $\theta$ of the scan area SA from the center of the circular area CA. In the scenario illustrated in Figs. 5A and 5B, for example $N(\theta1) = 2$, $N(\theta2) = 1$, and $N(\theta3) = 0$.

By performing the above-described steps S101 to S103, an angular distribution of neighbour nodes can be determined by a virtual scanning process wherein the determined angular distribution of neighbour nodes is represented by the number of neighbour nodes detected to be located within the scan area SA as a function $N(\theta)$ of the radial direction $\theta$ of the scan area SA as illustrated in Fig. 6 for a larger number of neighbour nodes as in Figs. 5A and 5B. The term virtual scanning process refers to the virtual character of the method since no actual sensor is rotated in the preferred embodiments of the present invention as the method is carried out as an implemented algorithm based on the received beacon signal data from the neighbour nodes.

As shown in Fig. 6, the number of neighbour nodes is only indicated for a discrete number of radial directions separated by a constant angle $\Delta\theta$ because the scan area SA is rotated in discrete steps by an angle $\Delta\theta$ about the center of the circular area CA, $\Delta\theta$ being a unit fraction of 360 degrees. However, the present invention is not limited to this embodiment and the scan area SA may also be continuously rotated about the center of the circular area CA or the angle $\Delta\theta$ of the discrete step rotation $\Delta\theta$ may be dynamically adjusted to the density of neighbour nodes. It should be noted that the present invention is not limited to making use of a distribution as shown in Fig. 6 for the identification and detection of peaks. For exa.mple, instead of indicating the number of neighbour nodes $N(\theta)$ as a function of $\theta$, one might also multiply $N(\theta)$ by an integral number as a function of $\theta$ in order to enlarge the differences between peaks and hollows.

Since the neighbour nodes periodically send beacon signals according to this embodiment of the present invention, sequence of the steps S101 to S103 is also periodically repeated in order to periodically obtain an updated angular distribution of neighbour nodes utilizing the newly received beacon signals.

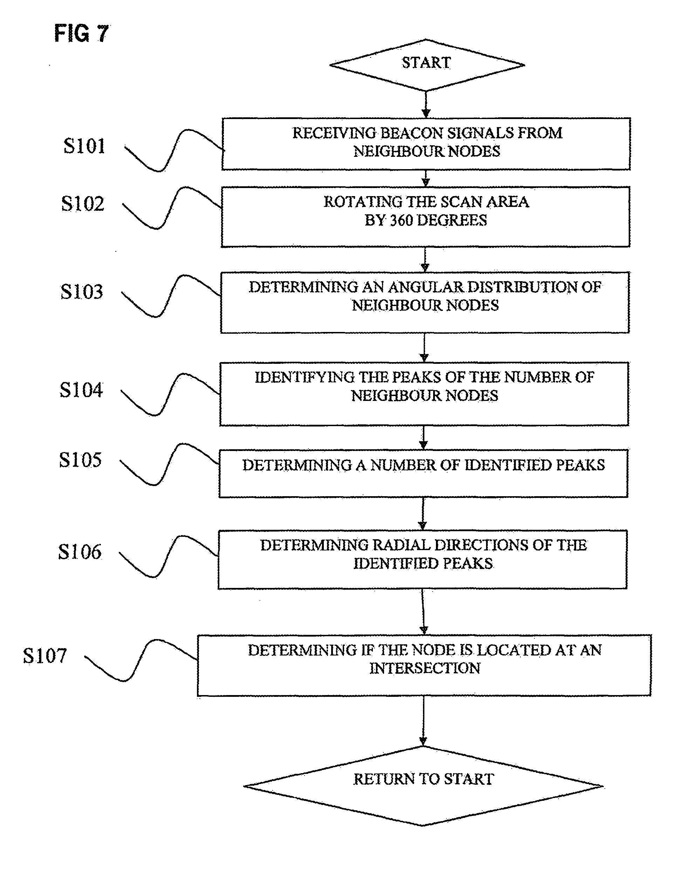

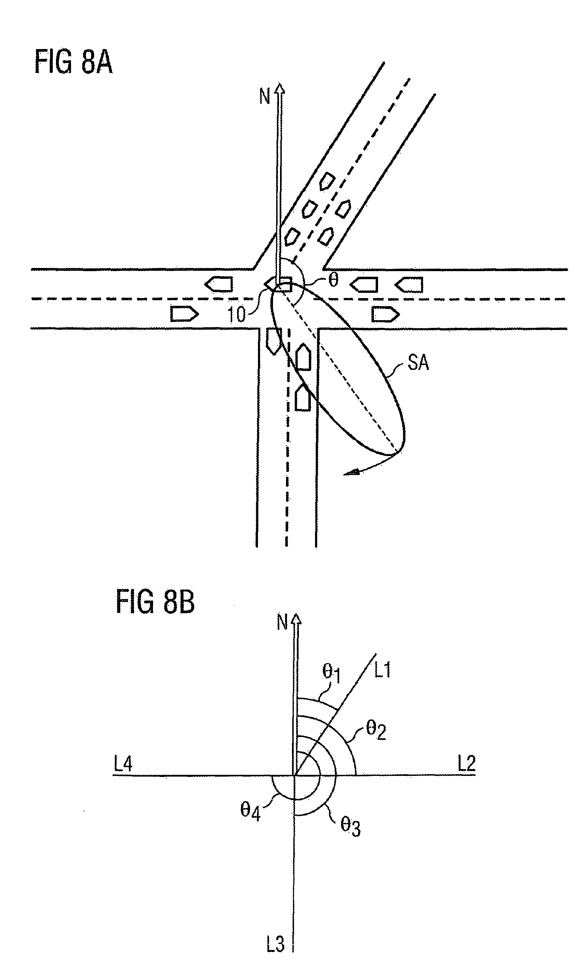

In a further embodiment of the present invention, the road topology in the vicinity of the first node 10 is determined based on the determined angular distribution of neighbour nodes. This embodiment will be described with reference to Figs. 7, and 8A to 8C.

For a better understanding, the terms intersection, link, and sub link, which are commonly used throughout the specification, are briefly explained in the following. A location within a road network, where different road sections cross each other (intersect), are referred to as intersections. Furthermore, also locations in the road network, where at least three road sections meet, are referred to as intersections. The road sections between two intersections are referred to as a links so that different links are separated by intersections. A road network may, therefore, be represented by a structure comprising only links and intersections forming a grid-like structure of links.

Furthermore, if a vehicle is located in a link between two intersections, the link is separated into two sub links, one downstream sub link located in the direction into which the vehicle moves and one upstream sub link located in the opposite direction as the direction into which the vehicle moves.

As shown in Fig. 7, in the method according to this embodiment of the present invention, the steps S101 to S103 are carried out as in the embodiment of Fig. 4. However, according to this embodiment of the present invention, the method further comprises the steps S104 of identifying peaks of the number of neighbour nodes, S105 of determining a number of identified peaks, S106 of determining radial directions of identified peaks, and S107 of determining, whether the node is located at an intersection or in a link between two intersections. These steps will be described in the following witch reference to Figs. 8A to 8C.

Fig. 8A shows a first node 10 which is currently located at an intersection at which two road sections intersect so that four links of the road network merge together. Plural neighbour nodes of the first node 10 are located in each of the different links. The first node 10 has received the beacon signals of the neighbour nodes in step S101 and rotates the scan area SA clockwise about the position of the first node 10 in step S102 to accordingly determine the angular distribution of the neighbour nodes of the first node 10 in step S103.

Fig. 8B shows the links L1, L2, L3, and L4 and the intersection corresponding to the road sections of the local road network topology as shown Fig. 8A. Again, radial directions of the links are indicated by the angles with respect to the direction of north (N), where link L1 has a direction indicated by the angle $\theta1$, link L2 has a direction indicated by the angle $\theta2$, link L3 has a direction indicated by the angle $\theta3$, and link L4 has a direction indicated by the angle $\theta4$.

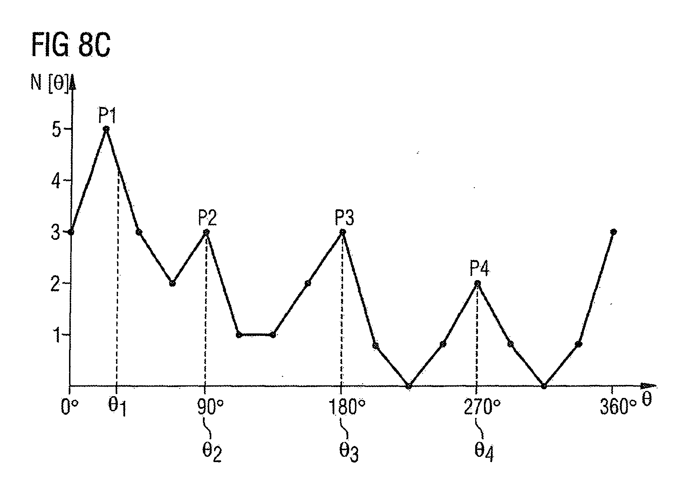

Fig. 8C shows an angular distribution of neighbour nodes of the first node 10 of Fig. 8A. As shown in Fig. 8C, the step S102 of rotating the scan area SA about the position of the first node 10 is carried out in discrete steps at a constant rotating angle of 22,5° (generally referred to as $\Delta\theta$) so that after 16 discrete rotations of 22.5°, the scan area SA is rotated by the whole 360°. After each discrete rotation, the number of neighbour nodes located within the scan area SA is counted, based on the position data of the beacon signals received from the neighbour nodes. The result, i.e. the angular distribution of neighbour nodes as a function $N(\theta)$ of the radial direction $\theta$ is illustrated by the curve in Fig. 8C representing the radial distribution of nodes in the vicinity of the first node 10.

Further, in the curve of the number of neighbour nodes as a function of the radial direction in Fig. 8C, four peaks P1, P2, P3, and P4 occur as a local maximum of the number of neighbour nodes in four different radial directions and are identified in step S104. In step S105, the number of the identified peaks P1, P2, P3, and P4 is determined, e.g. in Fig. 8C, the number of identified peaks P1, P2, P3, and P4 is determined to be four. Furthermore, the radial directions of the peaks are determined from the angular distribution of neighbour nodes, wherein in Fig. 8C, the actual radial directions of the links L1, L2, L3, and L4 are indicated by the vertical lines labelled θ1, θ2, θ3, and θ4, respectively. Different algorithms can be implemented to calculate the position (radial direction) at which the peaks appear in order to determine the radial direction of the links at high precision. Of course, the achievable precision depends, amongst others, on the size and shape of the scan view shape, the density of neighbour nodes, and the size of the discrete rotating angle Δθ.

Finally, in step S107, it is determined, whether the first node 10 is located at an intersection or in a link between two intersections based on the number of identified peaks P1, P2, P3, and P4. Since the number of identified peaks according to this example is four, it can be determined that the first node 10 is located at an intersection because the number of identified peaks is larger than two as would be the case if the first node 10 was located in a link between two intersections.

It should be noted that a number of identified peaks that exceeds two peaks definitely implies that the first node is located at an intersection having at least as much links merging into each other as the number of identified peaks. If the number of identified peaks, however, is equal to two, it does not necessarily mean that the first node is actually located in a link and not at an intersection because it might be that some of the links could not be identified due to the absence of neighbour nodes in these links. However, from a point of view of most VANET applications, such as for example next forwarding node selection, only the links having neighbour nodes are relevant and these links can be detected.

In a further embodiment of the present invention, the beaconing signal received from stationary nodes, e.g. a road side unit, further comprises location type data which indicates whether the stationary node is located at an intersection or in a link between two intersections, wherein the step S107 of determining whether the first node 10 is located at an intersection additionally utilizes the location type data of stationary nodes when the stationary nodes are neighbour nodes of the first node 10 in order to improve the reliability of the determination result of S107. According to this embodiment, the sequence of steps S101 to S107 is repeated periodically in order to dynamically determine periodically updated node distribution and updated detection of the road topology. However, the present invention is not limited to this and the sequence of steps S101 to S107 may also be carried only on demand, i.e. when a determination of the node distribution is required for a specific purpose.

In a further embodiment of the present invention, after carrying out S101 to S107 as already described for the preceding embodiment, the method further comprises an additional step S108 of determining which of the two sub links of a link is the downstream link and which of the two sub links is the upstream link from point of view of the first node 10 with respect to the moving direction of the first node 10 when it is determined in step S107 that the first node 10 is located in a link between two intersections.

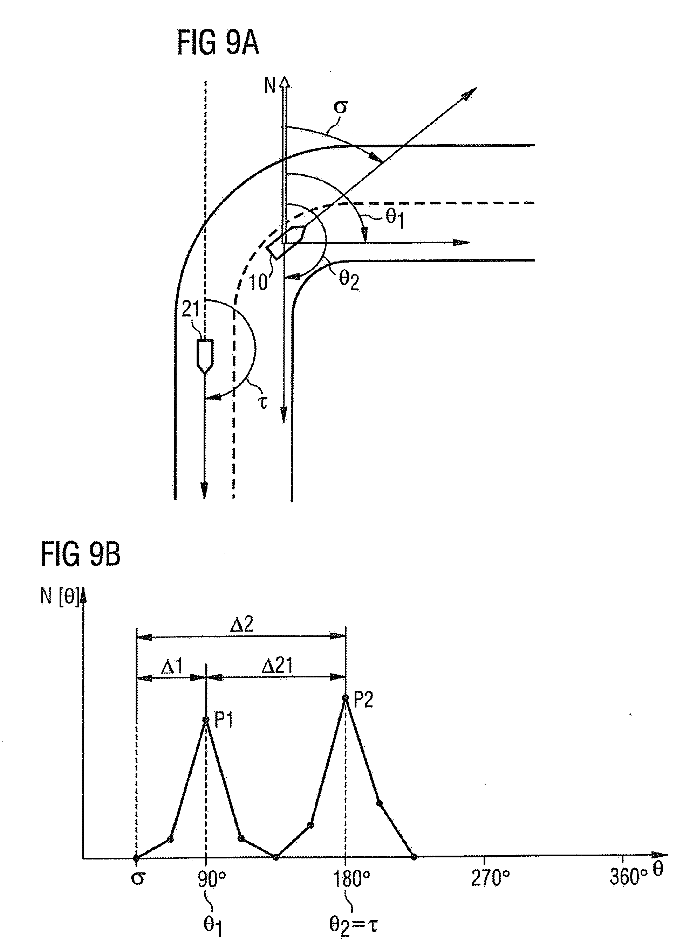

In this step S108, a moving direction σ of the first node 10 as illustrated in Fig. 9A is compared with the determined radial directions θ1 and θ2 of the two sub links. Fig. 9B schematically shows the determined angular distribution of neighbour nodes of the first node 10 for a situation as illustrated in Fig. 9A, wherein the peaks P1 and P2 have been identified in the step S104 and the respective directions θ1 and θ2 have been determined in step S106. Here, it is focused on the description of the principle of the determination of the direction of sub links and it is assumed in the further description that the determined radial directions of the peaks (peak positions in the function N(θ) of the number of neighbour nodes) are identical to the direction of the links, i.e. an uncertainty in the determination is omitted in the description.

For the comparison of radial directions, the angle differences Δ1 = | θ1 - σ | and Δ2 = | θ2 - σ | are calculated, which represent the differences between the moving direction σ of the first node 10 and the respective determined radial directions θ1 and θ2 of the sub links as shown in Fig. 9B. Based on the determined differences Δ1 and Δ2, it is possible to determine, which of the two sub links is the upstream sub link located upstream of the mobile node 10 and which of the two sub links is the downstream sub link located downstream of the first node 10.

In case the link is substantially a straight road, the moving direction σ of the first node 10 would be substantially similar to the direction of the downstream sub link direction so that the difference in direction would be substantially 0° or 360°, while the angle between the moving direction σ of the first node 10 and the direction of the upstream sub link direction would be substantially 180°.

Furthermore, as can be understood from Fig. 9A, the upstream sub link generally has a radial direction θ2 such that the angle difference Δ2 is closer to 180° than the angle difference Δ1 corresponding to the radial direction θ1 of the downstream sub link. On the other hand, the angle difference Δ1 corresponding to the radial direction θ1 of the downstream sub link is not necessarily closer to 0° than the angle difference Δ2 corresponding to the radial direction θ2 of the downstream sub link since it may also be closer to 360° as well, depending on the direction of North.

However, there may be a case in which neighbour nodes of the first node are only located in one of the sub links so that it is not possible to compare the angle differences $\Delta 1$ and $\Delta 2$ relating to the radial directions $\theta 1$ and $\theta 2$ of both sub links. In such a scenario, it is determined whether the respective sub link is the downstream link or the upstream link by calculating a difference $\Delta = |\theta S - \sigma|$ between the moving direction $\sigma$ of the first node 10 and the determined radial direction $\theta S$ of the single identified sub link by defining a threshold value $\Delta th < 90$ degrees.

If $\Delta th > \Delta$ or $\Delta th > |360° - \Delta|$, it is determined that the respective sub link is the downstream sub link and if $\Delta th > |180° - \Delta|$, it is determined that the respective sub link is the upstream sub link. According to this embodiment of the present invention, the threshold value $\Delta th$ is set to be constant. However, the present invention is not limited to this embodiment and the threshold value $\Delta th$ may also be set dependent on a determined steering angle of the moving vehicle, wherein $\Delta th$ has to be set to be larger if larger steering angles are detected.

In a further embodiment of the present invention, after carrying out the steps S101 to S108 as described above, the method further comprises a step S109 of determining a traffic direction of mobile neighbour nodes in the vicinity of the first node 10 in case the first node is located in a link between two intersections. In step S101, the first node 10 receives beacon signals from its respective neighbour nodes, including the mobile neighbour node 21 which travels in a direction $\tau$ as illustrated in Fig. 9A. The beacon signal received from neighbour node 12 comprises velocity data indicating the velocity direction $\tau$ of the neighbour node 21 so that at the receiver side of the first node 10, both, the velocity direction o of the first node 10 itself and the velocity direction $\tau$ of the neighbour node 21 are known. By comparing the two velocity directions $\tau$ and $\sigma$ in step S109, a traffic direction of the neighbour node 21 can be determined, i.e. it can be determined, whether the neighbour node 21 travels in a same traffic direction as the first node 10 or in an opposite traffic direction than the first node 10.

Therefore, for determining the traffic direction of the neighbour node 21 with respect to the velocity direction of the first node 10, an angle difference $|\sigma-\tau|$ is calculated. On substantially straight roads, a determination of the traffic direction can be performed as described in the following. When the angle differences $|\sigma - \tau|$ is close to 0° or 360°, the respective neighbour node 21 is determined to be travelling in the same traffic direction and when the angle difference $|\sigma - \tau|$ is close to 180°, the respective neighbour node 21 is determined to be travelling in the same traffic direction

However, if the first node travels on a road having a curved topology with turning angles up to 90°, then it generally holds that, when the first node 10 is located in a link between two intersections, the angle difference fulfils $90° < |\sigma - \tau| < 270°$ for neighbour nodes travelling in the opposite traffic direction than the first node 10, while the angle difference fulfils $|\sigma - \tau| < 90°$ or $|\sigma - \tau| > 270°$ for neighbour nodes travelling in the same traffic direction as the first node 10.

However, special situation may occur, where even the broad criteria as discussed above may lead to a wrong determination of the traffic direction of the neighbour nodes. For example, in cases in which the first node 10 is located in a link at a turn of a road with a turning angle below 90°, the first node 10 and a neighbour node may actually have the same traffic direction although the angle difference fulfils $90° < |\sigma - \tau| < 270°$ or they may have an opposite traffic direction although the angle difference fulfils $|\sigma - \tau| < 90°$ or $|\sigma - \tau| > 270°$.

Consequently, according to a preferred further embodiment of the present invention, the method is improved in step S109 in order to increase the reliability of the traffic direction determination. For this purpose, the velocity direction $\tau$ of a neighbour node 21, which is determined to be located in the upstream sub link of the first node 10, is alternatively compared to the radial direction 62 of the upstream sub link and, respectively, the velocity direction of a neighbour node, which is determined to be located in the downstream sub link of the first node 10, is alternatively compared to the radial direction $\theta 1$ of the downstream sub link. In this embodiment of the present invention, it is assumed that a respective sub link having a radial direction $\theta 1$ basically allows the two distinct travelling directions close to $\theta 1$ or $\theta 1 \pm 180°$. This determination of traffic direction based on a comparison of the sub link directions and the velocity direction $\tau$ of the neighbour node 21 can be combined with the method as described above, where the determination is based on a comparison of $\sigma$ and $\tau$.

Furthermore, in a case in which the first node 10 is located at an intersection, i.e. a number of identified peaks in the determined angular distribution of neighbour nodes is determined to be larger than two, a similar detection method can also be carried out when a historical trace information of the first node 10 is kept, e.g. by storing former position data and respective time stamp data of the first node 10, to determine a traffic direction of neighbour nodes located upstream of the first node (defined with respect to the historical trace data).

Furthermore, in such a case, the traffic direction may even be determined for neighbour nodes located downstream of the first node 10 when the first node 10 is aware of its future trace, e.g. which direction will be taken at the intersection. Here, the links of the intersection that respectively correspond to the historical former travelling direction and the predicted future trajectory or future travelling direction can, therefore, be used for the determination of a traffic direction of neighbour nodes and/or for the determination of a downstream side and an upstream side with respect to the first node 10.

In a further embodiment of the present invention, after carrying out the steps S101 to S109 as described above, the method further comprises a step S110 of determining a sub link angle in the case that the first node 10 is determined to be located in a link between two intersections. As shown in Fig. 9B the sub link angle corresponds to the angle

difference $\Delta 21 = |\theta 2 - \theta 1|$, i.e. to the angle between the radial directions of the two sub links determined based on the position of the identified peaks P1 and P2. Based on the calculated value for the angle difference $\Delta 21$, a danger classification of a dangerous character of a turn between the two sub links can be performed when the first node 10 is located in the respective turn while performing the steps S101 to S110. In the case the first node 10 is determined to be located at an intersection, the angles between adjacent links of the intersection can be determined correspondingly in order to detect a dangerous situations, as for example a narrow link angle between two links that merge at the intersection.

For example, a predetermined danger classification may be represented by the following categories:

- "substantially straight road" for $165° < \Delta 21 < 195°$,
- "turn" for $135° < \Delta 21 < 165°$ and $195° < \Delta 21 < 225°$, and
- "dangerous turn" for $\Delta 21 < 135°$ and $\Delta 21 > 225°$.

By defining a first dangerous turn threshold value and a second dangerous turn threshold value (e.g. 135° and 225° as in the above classification), a dangerous turn can be detected, if the sub link angle $\Delta 21$ is determined to be above, or respectively below the respective dangerous turn threshold value (i.e. a relative sub link angle $\min(\Delta 21, 360°-\Delta 21)$ is below the smaller of the first and second threshold values, e.g. obtained as $\min(135°, 225°) = 135°$).

Furthermore, by additionally considering the information from the determination of the upstream sub link and downstream sub link of step S108, it is even possible to determine, whether the dangerous turn is a right turn or a left turn from point of view of the moving direction of the first node 10.

If a dangerous turn is detected, either in a link between two intersections or at an intersection between two links of the intersection, a warning signal can be transmitted to the neighbour nodes in the vicinity of the first node 1.0 in order to warn the neighbour nodes about the dangerous turn. Especially, by sending the warning signal to neighbour nodes located in the downstream sub link travelling in the opposite traffic direction than the first node 10 and to neighbour nodes located in the upstream sub link travelling in the same traffic direction as the first node 10, nodes travelling towards the detected dangerous turn can be effectively warned about the dangerous turn to increase the road safety and avoid accidents. The warning signal can comprise dangerous turn data that vindicates the angle of the detected dangerous turn in a link between two intersections or at an intersection so that the information about the topology as well as the information about the danger itself can be transmitted to other nodes.

Furthermore, by combining this dangerous turn detection with additional on-board sensors and data provided by an in-vehicle CAN (Controller Area Network) bus, further potential dangerous situations such as lane departure, road departure can be estimated and respective warning messages can be provided to the driver via an in-vehicle HMI (Human-Machine-interface). Furthermore, by combining this detection with sensor data of neighbour nodes received via beaconing, the first node 10 can evaluate a potential accident in the curve, generate a. respective warning message and send it to neighbour nodes so that it may be disseminated in the VANET.

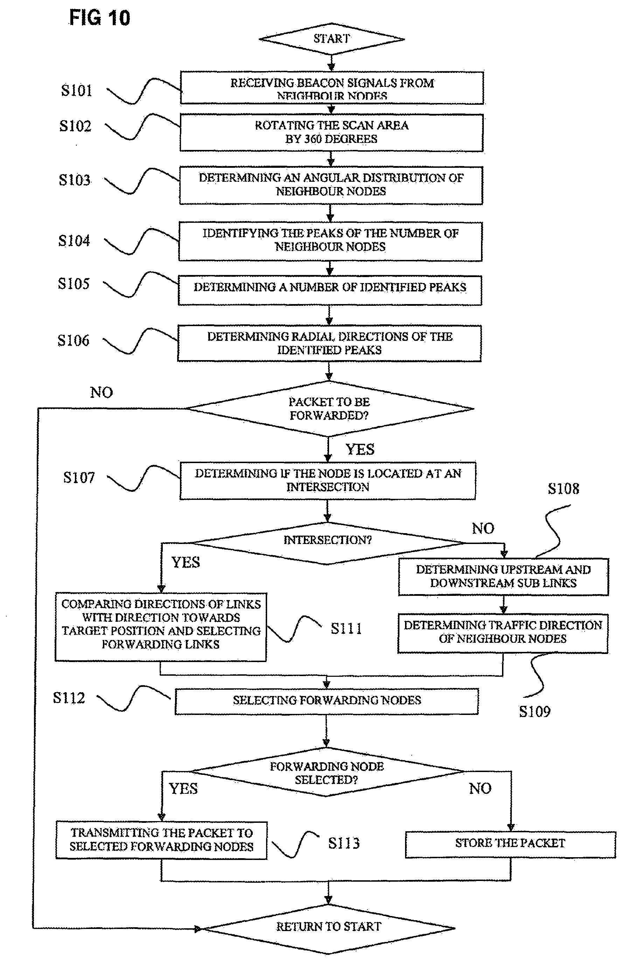

According to a further embodiment of the present invention as shown in Fig. 10, the steps S101 to S107 are carried out as described in previously discussed embodiments of the present invention in order to utilize the obtained knowledge about the road network topology, as indicated by the determined angular distribution of neighbour nodes, and the node distribution in a geo-based routing protocol for forwarding node selection that does not require a further map database of GIS data.

In this regard, it should be noted that the determination of radial directions of links, which is based on the determination of the radial position of peaks in the angular distribution of neighbour nodes, can only be effectuated when vehicles or road side units are located in the respective links and participate to VANET as nodes. As a consequence, it might happen that a link cannot be detected because of a lack of nodes located in the respective link. Such a situation may especially occur in a loose network, when a road traffic density and/or a corresponding traffic flow is low. However, it should be further noted that this would not be a problem for most efficiently selecting a next forwarded in a current situation because the forwarding node selection can only be performed among available neighbour nodes.

Referring back to Fig. 10, if it is detected that the first node 10 is not located at an intersection in step S107 so that it is determined that the first node 10 is located in a link between two intersections, the step S108 of determining, which of the two sub links is the upstream sub link and which of the two sub links is the downstream link is carried on, followed by step S109 of determining a traffic direction of neighbour nodes.

In the next step S112 of selecting a forwarding node from the neighbour nodes of the first node 10, a forwarding node is selected to which the packet shall be transmitted in the next step S113 of transmitting the packet to the selected forwarding node.

In the now described cause, according to which it has been determined that the first node 10 is not located at an intersection in step S107, the following criteria are used in the step S112 of selecting a forwarding node.

First, the direction from the first node 10 towards the target position D to which the packet shall be transmitted via multi-hopping is respectively compared with the directions of the upstream sub link and the down stream sub link as determined in the steps S106 and S108 to determine whether the target position D is located closer to the upstream sub link direction or closer to the downstream sub link direction, i.e. if the target position D is located upstream or downstream of the first node 10.

However, for some specific applications realised by VANET, the information concerning whether the target position D is located in the upstream or downstream location can be already known in advance, informed by the vehicle that is generating and sending the packet to be transmitted, depending on the nature of the transmitted information and /our the requirements of the application. This is, for example, the case, when a breakdown vehicle on a highway is sending the information concerning the breakdown situation in order to avoid follow-up accidents with vehicles coming towards the breakdown vehicle. Obviously, the target receivers in this example are vehicles in the upstream position that are travelling towards the breakdown vehicle, and the target location D is located in the upstream link. Vehicles in the downstream and travelling in the same direction are not concerned anyway by the packet since they have already passed by the location. For vehicles located in the opposite traffic directions, they are not concerned by the information neither. However, this does not exclude the possibility that they can be selected to forward the packet, since they are travelling towards the targeting location D.

If the direction from the first node 10 to the target position D is closer to the direction of the upstream sub link, and one neighbour node is located in the upstream sub link of the first node 10, this neighbour node is selected as next forwarding node.

If the direction from the first node 10 to the target position D is closer to the direction of the upstream sub link, and a plurality of neighbour nodes are located in the upstream sub link of the first node 10, one of this plurality of neighbour nodes located in the upstream sub link is selected as next forwarding node according to the following two criteria which are combined in the selection of the next forwarding node, the importance of the criteria in the combination of criteria being weighted by an algorithm for optimizing the results.

One criterion is the respective relative distance between the target position D and the neighbour nodes located in the upstream sub link, the respective relative distances being calculated from the respective position data of the neighbour nodes and the target position D, wherein the neighbour node having the smallest relative distance to the target position D is preferred to be selected as the next forwarding node. Consequently, neighbour nodes being located closer to the target position D are preferred to be selected as the next forwarding node according to this criterion. This criterion shall have a higher weighting when it is to be expected that the next-to-next forwarding node may be selected instantly because of a high density of nodes.

The other criterion is the traffic direction of the neighbour nodes as determined in step S109, according to which neighbour nodes located in the upstream sub link which are travelling in the opposite traffic direction than the first node are preferred to be selected over neighbour nodes located in the upstream sub link which are travelling in the same traffic direction as the first node. According to this criterion, a neighbour node which is travelling in the direction of the target position D is preferred to be selected as the next forwarding node. This criterion shall have a higher weighting when it is to be expected that the next-to-next forwarding node may not be selected instantly because of a low density of nodes and the next forwarding node is, therefore, expected to be required to intermediately store the packet until it may be forwarded to a next-to-next forwarding node.

If the direction from the first node 10 to the target position D is closer to the direction of the upstream sub link, but there is no neighbour node located in the upstream sub link, the first node 10 selects a neighbour node located in the downstream link which travels in an opposite traffic direction than the first node 10 or keeps the packet stored until a forwarding node can be selected according to the above criteria when there is also no neighbour node available which is located in the downstream link and travels in an opposite traffic direction.

On the other hand, if the direction from the first node 10 to the target position D is closer to the direction of the downstream sub link, and one neighbour node is located in the downstream sub link of the first node 10, this neighbour node is selected as next forwarding node.

If the direction from the first node 10 to the target position D is closer to the direction of the downstream sub link, and a plurality of neighbour nodes is located in the downstream sub link of the first node 10, one of this plurality of neighbour nodes located in the downstream sub link is selected as next forwarding node according to the following two criteria which are combined in the selection of the next forwarding node, the importance of the criteria in the combination of criteria being weighted by an algorithm for optimizing the results.

One criterion is the respective relative distance between the target position D and the neighbour nodes located in the downstream sub link, the respective relative distances being calculated form the respective position data of the neighbour nodes and the target position D, wherein the neighbour node having the smallest relative distance to the target position D is preferred to be selected as the next forwarding node, Consequently, neighbour nodes being located closer to the target position D are preferred to be selected as the next forwarding node according to this criterion. This criterion shall have a higher weighting when it is to be expected that the next-to-next forwarding node may be selected instantly because of a high density of nodes.

The other criterion is the traffic direction of the neighbour nodes as determined in step S109, according to which neighbour nodes located in the downstream sub link which are travelling in the same traffic direction as the first node are preferred to be selected over neighbour nodes located in the downstream sub link which are travelling in the opposite traffic direction than the first node 10. According to this criterion, a neighbour node which is travelling in the direction of the target position D is preferred to be selected as the next forwarding node. This criterion shall have a higher weighting when it is to be expected that the next-to-next forwarding node may not be selected instantly because of a low density of nodes and the next forwarding node is, therefore, expected to be required to intermediately store the packet until it may be forwarded to a next-to-next forwarding node.

If the direction from the first node 10 to the target position D is closer to the direction of the downstream sub link, but there is no neighbour node located in the downstream sub link, the first node 10 keeps the packet stored so as to bring the packet towards the target position D by travelling along the link until a forwarding node can be selected according to the above criteria.

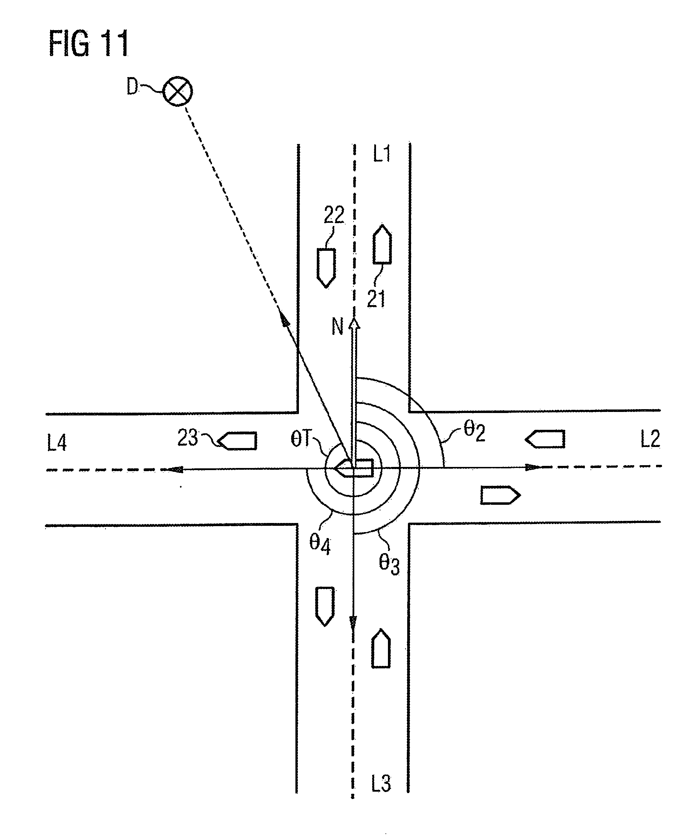

In the other case in which it is determined in step S107 that the first node 10 is located at an intersection, the method continues with the steps S111 of comparing the directions of the plurality of links with the direction towards the target position D and S112 of selecting a forwarding node out of available neighbour nodes. A corresponding situation is illustrated in Fig. 11. A first node 10 is located at an intersection having four links, L1, L2, L3, and L4 merging respectively at the directions θ1=0°, θ2=90°, θ3=180°, and θ4=270° with respect to the direction of North N. In such a situation, the direction θT from the first node 10 to the target position D is compared in step S111 with the respective directions of the links as determined from the determined radial direction of the peaks P1, P2, P3, and P4 in step S105.

In step S111, when the first node 10 is located at an intersection and a packet shall be forwarded to a target position D, at least two of the detected links are chosen as a forwarding link, which means that in the following step S112 a forwarding node is selected from each of the at least two selected forwarding links so that the packet is then transmitted in step S113 to at least two forwarding nodes, respectively located in the two selected forwarding links.

At least the two links of the intersection having its link directions closest to the direction θT from the first node to the target position D are selected as forwarding links. In Fig. 11, the direction θT to the target position is 330° and the relative angles between the link directions and the direction to the target position are

$$\min\ (|\ \theta T - \theta 1\ |,\ 360° - |\ \theta T - \theta 1\ |) = 30°\ \text{for L1,}$$

$$\min\ (|\ \theta T - \theta 2\ |,\ 360° - |\ \theta T - \theta 2\ |) = 120°\ \text{for L2,}$$

$$\min\ (|\ \theta T - \theta 3\ |,\ 360° - |\ \theta T - \theta 3\ |) = 150°\ \text{for L3,}$$

and

$$\min\ (|\ \theta T - \theta 4\ |,\ 360° - |\ \theta T - \theta 4\ |) = 60°\ \text{for L4.}$$

Consequently, at least the links L1 and L4 are selected as forwarding link in step S111 so that in step S 112 at least a neighbour node located in the link L1 and a neighbour node located in the link L4 are selected as next forwarding nodes and the packet is transmitted to the selected next forwarding nodes in step S:113. It is to be noted that it is assumed that there is at least one neighbour node located in the respective links L1 and L4, since the links could otherwise not have been detected because no corresponding respective peak could have been identified in the respective link direction.

If only one neighbour node 23 is located in a link L4 selected as a forwarding link, this neighbour node 23 is selected as forwarding node and the first node 10 transmits the packet to the respective neighbour node 23.

If two or more neighbour nodes 21 and 22 are located in a link L1 selected as a forwarding link, the next forwarding node in this forwarding link L1 is selected by a combination of two criteria based on the distance to the target position and the travelling direction similar to the two above-described criteria for selecting forwarding nodes out of neighbour nodes located in a sub link of a link.

More precisely, at an intersection, a criterion for selecting a next forwarding node in a selected forwarding link is that a neighbour node located in the forwarding link is selected which is located closest to the target position D compared to the other neighbour nodes located in the respective forwarding link. The other criterion is that neighbour nodes travelling away from the intersection towards the target position are preferred to be selected as a next forwarding node over the neighbour nodes travelling towards the intersection away from the target position. This can be determined based on the comparison in step S111, namely, the comparison of the velocity direction of the neighbour nodes and the direction towards the target position D and/or based on the comparison of the velocity direction of the neighbour nodes and the link direction of the forwarding link. The above-mentioned criteria are weighted by an algorithm to optimize the results.

Referring to Fig. 11, since the neighbour nodes 22 and 32 located in the link L1, which is selected as one of the forwarding links, are very similar in distance to the target position D, neighbour node 21 is preferred to be selected as next forwarding node over neighbour node 22 which travels in the direction towards the intersections.

Since the packet will be forwarded in at least two directions because it is transmitted to forwarding nodes in different forwarding links, a situation may occur, where one of the directions is not suitable to forward the packet to the target position. So, in order not to have packets multi-hopping in the VANET so that the forwarding process continues indefinitely, thereby consuming VANET infrastructure, a packet has to be dropped at some point. Generally, a packet may be dropped if the number of multi-hops, i.e. the number of forwarding steps exceeds a threshold value.

However, in this embodiment a so-called shrinking level is respectively calculated at each intermediate node in the multi-hop communication, wherein the shrinking level at least contains information about the distance between an intermediate node and the target position D, but may further depend on parameters such as e.g. forwarding link direction, travelling direction, and/or forwarding direction. The calculated shrinking level will be transmitted together with the packet in the forwarding process to keep a historical information about the development of the shrinking level with the packet during the forwarding process. If one of the selected forwarding links leads to a situation in which the packet is forwarded along a forwarding trace in which the shrinking level is increasing for a certain number of communication hops (forwarding steps), the packet shall be dropped, i.e. forwarding shall be terminated.

In the above-mentioned embodiment, a combination of two criteria, being based on the distance to the target position and the travelling direction or traffic direction have been used in the step S112 of selecting a next forwarding node, whereas the present invention is not limited to this embodiments and also only one of the respective criteria may be used as a single criteria in forwarding node selection.

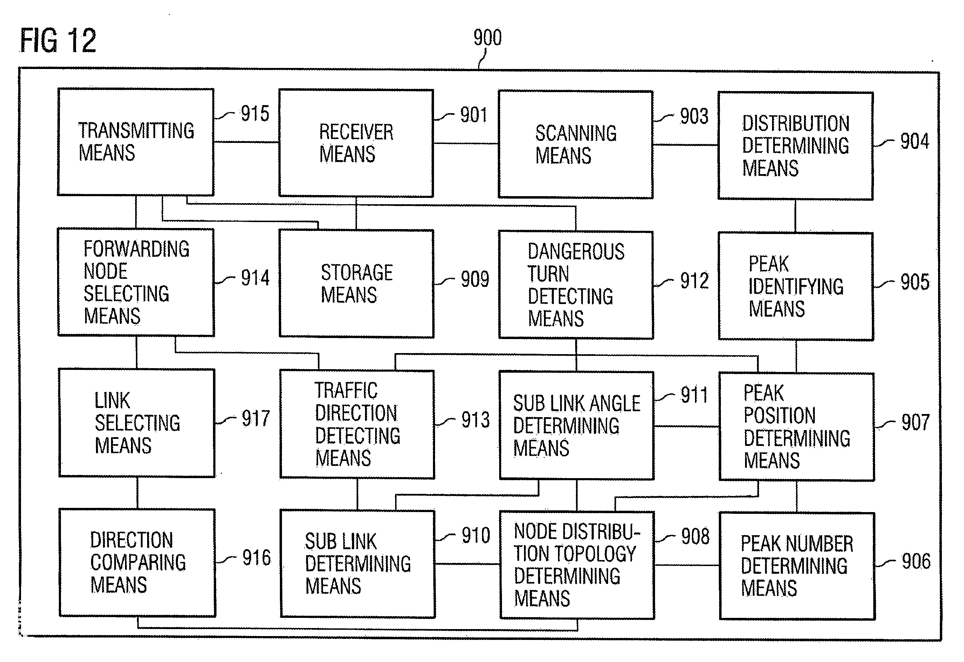

According to a further embodiment of the present invention, an apparatus 900 for determining a distribution of neighbour nodes around a first node 10 in a communication network is configured to be able to perform all of the methods as described in the preceding embodiments of the present invention. The apparatus will be described with reference to Fig. 12.

The apparatus comprises a receiver means 901 and a transmitting means 915. The receiver means is configured to receive, from a receiving point of view, corresponding to a first node 10 in a VANET, beacon signals which are respectively transmitted from one or more neighbour nodes located in the beaconing range of the first node 10 and the transmitting means 915 is configured to periodically send beacon signals from the first node to the neighbour nodes of the first node. The transmitting means is further configured to transmitting a packet from the first node to a neighbour node, which is selected as a forwarding node in multi-hop communication.

The apparatus 900 further comprises a scanning means 903 configured to virtually rotate a virtual scan area SA about the center of a circular area CA, wherein a scan area SA is defined according to one of the preceding embodiments, for example described with reference to Figs. 5A and 5B. Furthermore, the apparatus 900 comprises a distribution determining means 904 configured to determine an angular distribution of the neighbour nodes of the first node by counting the number of neighbour nodes located within the scan area SA while the scanning means 903 rotates the scan area SA, based on position data of the neighbour nodes, as a function $N(\theta)$ of a radial direction $\theta$ of the scan area SA from the center of the circular area CA.

The apparatus 900 further comprises a peak identifying means 905 configured to identify peaks of the number of neighbour nodes in the determined angular distribution of neighbour nodes, a peak number determining means 906 configured to determine a number of the identified peaks in the determined angular distribution of neighbour nodes in order to determine a number of links of a road network in the vicinity of the first node, a peak position determining means 907 configured to determine the respective radial directions of the identified peaks based on the determined angular distribution of neighbour nodes, and a node distribution topology determining means 908 configured to determine, whether the first node is located at an intersection of a plurality of links or in the middle of a. link based on the determined number of identified peaks.

The apparatus 900 further comprises a storage means 909 configured to store data comprised in the received beacon signals and to store a packet that shall be forwarded to a target position D in a case in which the packet has to be kept until a next forwarding node becomes available in multi-hop communication, i.e. until a next forwarding node can be selected.

The apparatus 900 further comprises a sub link determining means 910 configured to determine, which of two sub links of a link is the downstream sub link located downstream of the first node and which of the two sub links is the upstream sub link located upstream of the first node based on the angles between the direction of the velocity of the first node and the respective directions of the two sub links determined from the radial directions of the two identified peaks corresponding to the sub links, in a case, when the node distribution topology determining means 908 has determined that the first node is not located at an intersection, when the peak number determining means 906 indicates two identified peaks.

The apparatus 900 further comprises a sub link angle determining means 911 configured to determine a sub link angle between the upstream sub link and downstream sub link, determined by the sub link determining means 910, based on the angle between the radial directions of the identified peaks in the determined angular distribution of neighbour nodes which correspond to the two sub links, and a dangerous turn detecting means 912 for detecting a dangerous turn in a case in which a determined sub link angle is below a first predetermined threshold or above a second predetermined threshold value. The dangerous turn detecting means can also determine dangerous situation such as a narrow link angle above or below a threshold in case the first node is determined to be located at an intersection so that a corresponding warning signal can also be sent out based on the determined road topology of the respective detected links of an intersection similar to a warning signal indicating a dangerous turn in a link between two intersections.

The apparatus 900 further comprises a traffic direction determining means 913 configured to detect the traffic direction of a mobile neighbour node to determine, if said mobile neighbour node is travelling in a same traffic direction as the first node or an opposite traffic direction than the first node based on the angle between the velocity direction of the first node and the velocity direction of the mobile neighbour node indicated by the velocity data of the beacon signal received from the neighbour node by the receiver means 901.

The apparatus 900 further comprises a forwarding node selecting means 914 configured to select one or more of the current neighbour nodes of the first node 10 as forwarding nodes based on the determined angular distribution of current neighbour nodes, the determined traffic directions and/or a direction from the first node o a target position (D) to which the packet shall be transmitted by the transmitting means 915, in the case that a packet shall be forwarded to a target position D.

The apparatus 900 further comprises a direction comparing means 916 configured to compare the directions of the plurality of links of an intersection determined from the angular distribution of identified peaks with the direction from the first node towards a target position D for determining the respective angles between the directions of the plurality of links of the intersection and the direction from the first node towards the target position D, in a case in which the peak number determining means has determined that the number of identified peaks is larger than two, so that it is determined that the first node is located at an intersection of a plurality of links. The direction comparing means 916 is further configured to determine the direction from the first node 10 towards the target position D based on the position data of the first node 10 and the target position.

The apparatus 900 further comprises a link selecting means 917 for selecting at least two links of the plurality of links of the intersection as forwarding links, the two links of the intersection which have the smallest angle with respect to the direction from the first node (10) towards the target position (D), in the case that it is determined that the first node is located at an intersection and a packet shall be forwarded to the target position D.

The apparatus 900 further comprises a position determining means (not shown) to determine the geographic location, i.e. position, the speed as well as the velocity direction of the first node 10. This position and velocity information is based a synchronized timing among different nodes when determining time stamp data. The time stamp, position, speed and velocity direction will be included in the beacon signal that is sent out from the first node 10 and is therefore provided to the transmitting means 915. The position and velocity direction information can be used at least by the sub link determining means 910 for downstream/upstream sub-link determination, by the traffic direction determining means 913 to define the same/opposite travelling direction of a neighbour node with regard to the first node 10, and by the node selecting means 914 during the next forwarding node selection.

The above-mentioned apparatus 900 as shown in Fig. 12 is configured to be able to perform all of the methods as described above relating to preferred embodiments of the present invention. As becomes apparent from the description of the methods according to the above embodiments of the present invention, some of these methods do not require all of the above-described means of the apparatus 900. Another embodiment of an apparatus according to the present invention comprising not all but at least the corresponding above-mentioned means, which are required to perform at least one method according to one of the above-described embodiments of the present invention shall be regarded as implicitly disclosed.

The above-mentioned features and embodiments can be combined in any way, partly or as a whole.

According to the invention, no additionally utilized map database or GIS data is required in the detection process and forwarding node selecting process. Furthermore, according to the present invention, information as comprised in beacon signal data of a beaconing function can be used, which is usually provided as a basic function of VANET.

According to the present invention, the selection of a forwarding node is performed at the receiver side by analysing beacons received from neighbour nodes. As a very precious advantage, no new additional signals are required to be sent, thus, it is also not required to provide additional means and/or work charge for radio media.

More particularly, according to the present invention, the combination of information about the VANET topology with information about the road network topology improves the robustness of the routing/ forwarding process because the forwarding node selection is performed in accordance with the road network topology and traffic directions of the nodes. Thus, higher efficiencies and higher success rates in routing can be achieved.

**Claims**

1. Method for determining a distribution of neighbour nodes around a first node (10) in a communication network comprising a plurality of mobile nodes or a plurality of mobile and stationary nodes, the mobile nodes being configured to travel in a traffic network comprising a plurality of links and intersections of links, wherein a link is a section between two intersections of the traffic network, the method comprising:

    - receiving, at the first node (10), beacon signals which are respectively transmitted from one or more neighbour nodes (21, 22, 23, 24) located in a beaconing range of the first node (10), wherein the beacon signal transmitted from a neighbour node (21; 22; 23; 24) comprises identification data which identifies the respective neighbour node (21; 22; 23; 24) and position data which indicates the position of the respective neighbour node (21; 22; 23; 24);
    **characterized in that**
    the method further comprises:
    - rotting a scan area (SA) about the center of a circular area (CA), wherein the scan area (SA) is a partial area of the circular area (CA) having the first node (10) in the center, and the scan area (SA) has a predetermined scan view shape and extends from the center of the circular area (CA) to at least the circumference of the circular area (CA) in a defined radial direction from the center of the circular area (CA); and
    - determining an angular distribution of neighbour nodes (21, 22, 23, 24) located in the beaconing range of the first node (10) by counting the number of neighbour nodes (21, 22, 23, 24) located within the scan area (SA) while rotating the scan area (SA), based on the position data of the neighbour nodes (21, 22, 23, 24), as a function ($N(\theta)$) of a radial direction ($\theta$) of the scan area (SA) from the center of the circular area (CA),

2. Method according to claim 1, wherein
    the beacon signals, which are respectively transmitted from the neighbour nodes (21, 22, 23, 24), further comprise time stamp data which indicates a specific time,
    wherein the position data comprised in the beacon signal indicates the position of the respective neighbour node (21; 22; 23; 24) at the specific time indicated by the time stamp data, and
    wherein the position data of the respective neighbour node (21; 22; 23; 24) is discarded from being considered in the determining an angular distribution of neighbour nodes (21, 22, 23, 24), when a time interval longer than or equal to a predetermined time interval has elapsed since the specific time indicated by the respective time stamp data.

3. Method according to claim 2, wherein
    one or more of the neighbour nodes (21, 22, 23, 24) periodically transmit beacon signals with respectively updated position data and updated time stamp data,
    wherein in a case in which the first node (10) has periodically received a plurality of beacon signals from the same neighbour node (21; 22; 23; 24) within the predetermined time interval, only the position data of the beacon signal from said same neighbour node (21; 22; 23; 24) having the time stamp data which indicates the latest respective specific time is used for the determining the angular distribution of neighbour nodes (21; 22; 23; 24).

4. Method according to at least one of claims 1 to 3, wherein
    the first node (10) periodically repeats the rotating the scan area (SA) and the determining the angular distribution of neighbour nodes (21, 22, 23, 24) for determining periodically updated angular distributions of neighbour nodes (21, 22, 23, 24).

5. Method according to at least one of claims 1 to 4, wherein the method further comprises:

    - identifying peaks (P1, P2, P3, P4) of the number of neighbour nodes (21, 22, 23, 24) in the determined angular distribution of neighbour nodes (21, 22, 23, 24);
    - determining a number of identified peaks (P1, P2, P3, P4) of the number of neighbour nodes (21, 22, 23, 24) in the determined angular distribution of neighbour nodes (21, 22, 23, 24) to determine a number of links in the vicinity of the first node (10) by taking equal the determined number of identified peaks (P1, P2, P3, P4) with the number of links in the vicinity of the first node (10);
    - determining radial directions of the identified peaks (P1, P2, P3, P4) based on the determined angular distribution of neighbour nodes (21, 22, 23, 24); and

- determining, whether the first node (10) is located at an intersection of a plurality of links or in a link between two intersections based on the determined number of identified peaks (P1, P2, P3, P4), wherein it is determined that the first node (10) is located at an intersection of a plurality of links if the determined number of identified peaks (P1, P2, P3, P4) is larger than two.

6. Method according to claim 5, wherein
in a case in which it is determined that the first node (10) is located in a link between two intersections so that the position of the first node (10) divides the link in two sub links, the method further comprises

- determining, which of the two sub links is the downstream sub link located downstream of the first node (10), wherein downstream indicates the direction into which the first node (10) travels, and which of the two sub links is the upstream sub link located upstream of the first node (10), wherein upstream indicates the direction opposite to the direction into which the first node (10) travels, based on a comparison of the angles between the direction of the velocity of the first node (10) and the directions of the two sub links determined from the radial directions of the identified peaks (P1, P2) corresponding to the sub links.

7. Method according to claim 5 or 6, wherein
in a case in which it is determined that the first node (10) is located in a link between two intersections so that the position of the first node (10) divides the link in two sub links, the method further comprises

- determining a sub link angle, which is the angle between the directions of the two sub links, based on the angle between of the radial directions of the identified peaks (P1, P2) in the determined angular distribution of neighbour nodes (21, 22, 23, 24) which correspond to the two sub links; and

in a case in which it is determined that the first node (10) is located at an intersection having at least three links merging into each other, the method further comprises

- determining at least one link angle of the intersection, the link angle being the angle between the directions of two adjacent links that merge at the intersection, based on the angle between the radial directions of the identified peaks (P1, P2, P3, P4) in the determined angular distribution of neighbour nodes (21, 22, 23, 24) which correspond to the links merging at the intersection.

8. Method according to claim 7, wherein
in a case in which the determined sub link angle or one of the at least one determined link angles of the intersection is below a first predetermined threshold value or above a second predetermined threshold value, the first node (10) transmits a warning signal to the neighbour nodes (21, 22, 23, 24) to indicate a dangerous turn or a dangerous link angle at an intersection and/or to warn about the dangerous turn or the dangerous link angle at an intersection.

9. Method according to at least one of claims 1 to 8, wherein the beacon signals received from the one or more neighbour nodes (21, 22, 23, 24) further comprise velocity data indicating the speed and/or the velocity direction of the respective neighbour nodes (21, 22, 23, 24),
wherein the method further comprises

- determining a respective traffic direction of at least one mobile neighbour node (21; 22; 23) of the one or more neighbour nodes (21, 22, 23, 24) to determine, whether said at least one mobile neighbour node (21; 22; 23) is travelling in a same traffic direction or an opposite traffic direction compared to the first node (10) based on the angle between the velocity direction of the first node (10) and the velocity direction of the at least one mobile neighbour node (21; 22; 23) or based on the angle between the velocity direction of the at least one mobile neighbour node (21; 22; 23) and at least one of the upstream sub link direction and the downstream sub link direction determined according to claim 6.

10. Method according to at least one of claim 1 to 9, wherein in a case in which a packet shall be transmitted to one or more target nodes, the target nodes being nodes of the communication network located at a predetermined target position (D) or located within a target geographic region indicated by the target position (D) and/or a region shape of the target geographic region, wherein the one or more target nodes are not neighbour nodes (21, 22, 23, 24) of the first node (10), the method further comprises:

- selecting one or more of the neighbour nodes (21, 22, 23, 24) of the first node (10) as forwarding nodes based on the determined angular distribution of neighbour nodes (21; 22; 23, 24) and the direction from the first node (10) towards the target position (D); and
- transmitting the packet from the first node (10) to the one or more selected forwarding nodes (21, 22, 23, 24).

11. Method according to claim 10, wherein
in a case in which the first node (10) is determined to be located at a link between two intersections and the target position (D) is located in the direction of a downstream sub link, wherein the downstream sub link is a portion of the link between the first node (10) and the one of the two intersections in the travel direction of the first node (10), only one or more neighbour nodes (21, 22, 23, 24) which are located in the downstream sub link are chosen as forwarding nodes,
wherein neighbour nodes (21, 22, 23, 24) moving in the same traffic direction as the first node (10) are preferred to be selected as forwarding nodes over neighbour nodes (21, 22, 23, 24) moving in the opposite traffic direction as the first node (10), and
wherein, when no neighbour node (21; 22; 23; 24) is located in the downstream sub link, the first node (10) stores the packet until at least one beacon signal from a neighbour node (21; 22; 23; 24) located in the downstream sub link of the first node (10) is received so that the respective neighbour node (21; 22; 23; 24) can be selected as a forwarding node; and
in a case in which the first node (10) is determined to be located in a link between two intersections and the target position is located in the direction of the upstream sub link, wherein the upstream sub link is a portion of the link between the first node (10) and the one of the two intersections in the direction opposite to the travel direction of the first node (10), only one or more neighbour nodes (21, 22, 23, 24) which are located in the upstream sub link are chosen as forwarding nodes,
wherein neighbour nodes (21, 22, 23, 24) moving in the opposite traffic direction as the first node (10) are preferred to be selected as forwarding nodes over neighbour nodes (21, 22, 23, 24) moving in the same traffic direction as the first node (10), and
wherein, when no neighbour node (21; 22; 23; 24) is located in the upstream sub link, the first node (10) stores the packet until at least one beacon signal from a neighbour node (21; 22; 23; 24) located in the upstream sub link of the first node (10) is received so that the respective neighbour node (21; 22; 23; 24) can be selected as a forwarding node and/or until at least one beacon signal from a neighbour node (21; 22; 23; 24) located in the downstream sub link and moving in the opposite traffic direction than the first node (10) is received so that the respective neighbour node (21; 22; 23; 24) can be selected as a forwarding node.

12. Method according to claim 10, wherein in a case in which the first node (10) is determined to be located at an intersection of a plurality of links, the method further comprises:

- comparing the directions of the plurality of links determined from the radial directions of the corresponding identified peaks (P1, P2, P3, P4) based on the angular distribution of identified peaks (P1, P2, P3, P4) with a direction from the first node (10) towards the target position (D) to determine the angles between the directions of the plurality of links and the direction from the first node (10) towards the target position (D); and
- selecting at least two links of the plurality of links of the intersection as forwarding links, the two links of the intersection which have the smallest angles with respect to the direction from the first node (10) towards the target position (D);

wherein in the selecting a forwarding node, at least for each of the selected forwarding links at least one neighbour node (21; 22; 23; 24) located in the respective forwarding link is selected as a forwarding node.

13. Apparatus for determining a distribution of neighbour nodes (21, 22, 23, 24) around a first node (10) in a communication network comprising a plurality of mobile nodes or a plurality of mobile and stationary nodes, the mobile nodes being configured to travel in a traffic network comprising a plurality of links and intersections of links, wherein a link is a section between two intersections of the traffic network, configured to perform the method according to at least one of the claims 1 to 12, comprising:

- a receiver means (901) for receiving, at the first node (10), beacon signals which are respectively transmitted from one or more neighbour nodes (21, 22, 23, 24) located in the beaconing range of the first node (21, 22, 23, 24), wherein the beacon signal transmitted from a neighbour node (21; 22; 23; 24) comprises identification data which identifies the respective neighbour node (21; 22; 23; 24) and position data which indicates the position of the respective neighbour node(21; 22; 23; 24);

**characterized in that**

the apparatus further comprises:

- a scanning means (903) for rotating a scan area (SA) about the center of a circular area (CA), wherein the scan area (SA) is a partial area of the circular area (CA) having the first node (10) in the center, and wherein the scan area (SA) has a predetermined scan view shape and extends from the center of the circular area (CA) to at least the circumference of the circular area (CA) in a defined radial direction from the center of the circular area (CA); and

- a distribution determining means (904) for determining an angular distribution of neighbour nodes (21, 22, 23, 24) located in the beaconing range of the first node (10) by counting the number of neighbour nodes (21, 22, 23, 24) located within the scan area (SA) while the scanning means (903) rotates the scan area (SA), based on the position data of the neighbour nodes (21, 22, 23, 24), as a function of a radial direction of the scan area (SA) from the center of the circular area (CA).

**14.** Apparatus according to claim 13, wherein the apparatus further comprises:

- a peak identifying means (905) for identifying peaks (P1, P2, P3, P4) of the number of neighbour nodes (21, 22, 23, 24) in the determined angular distribution of neighbour nodes (21, 22, 23, 24);

- a peak number determining means (906) for determining a number of identified peaks (P1, P2, P3, P4) of the number of neighbour nodes (21, 22, 23, 24) in the determined angular distribution of neighbour nodes (21, 22, 23, 24) to determine a number of links in the vicinity of the first node (10) by taking equal the determined number of identified peaks (P1, P2, P3, P4) with the number of links in the vicinity of the first node (10);

- a peak position determining means (907) for determining radial directions of the identified peaks (P1, P2, P3, P4) based on the determined angular distribution of neighbour nodes (21, 22, 23, 24); and

- a node distribution topology determining means (908) for determining, whether the first node (10) is located at an intersection of a plurality of links or in a link between two intersections based on the determined number of identified peaks (P1, P2, P3, P4), wherein it is determined that the first node (10) is located at an Intersection of a plurality of links if the determined number of identified peaks (P1, P2, P3, P4) is larger than two.

**15.** Apparatus according to claim 13 or 14, wherein the apparatus further comprises:

- defining means (902) for defining the scan area (SA);

- a storage means (909) for storing data comprised in the received beacon signals and/or storing a packet;

- a sub link determining means (910) for determining which of two sub links of a link is the downstream sub link located downstream of the first node (10), wherein downstream indicates the direction into which the first node (10) travels, and which of the two sub links is the upstream sub link located upstream of the first node (10), wherein upstream indicates the direction opposite to the direction into which the first node (10) travels, based on a comparison of the angles between the direction of the velocity of the first node (10) and the respective directions of the two sub links determined from the radial directions of the identified peaks (P1, P2) corresponding to the sub links;

- a sub link angle determining means (911) for determining a sub link angle, which is the angle between the directions of two sub links of a link, based on the angle between the radial directions of the identified peaks (P1, P2) in the determined angular distribution of neighbour nodes (21, 22, 23, 24) which correspond to the two sub links;

- a dangerous turn detecting means (912) for detecting a dangerous turn in a case in which a determined sub link angle is below a first predetermined threshold value or above a second predetermined threshold value;

- a traffic direction determining means (913) for determining the traffic direction of a mobile neighbour node (21; 22; 23) of the one or more neighbour nodes (21, 22, 23, 24) to determine, if said mobile neighbour node (21; 22; 23) is travelling in a same traffic direction as the first node (10) or an opposite traffic direction than the first node (10) based on the angle between the velocity direction of the first node (10) and the velocity direction of the mobile neighbour node (21; 22; 23);

- a forwarding node selecting means (914) for selecting one or more of the neighbour nodes (21, 22, 23, 24) of the first node (10) as forwarding node based on the determined angular distribution of neighbour nodes (21, 22, 23, 24), the determined traffic directions and/or a direction from the first node (10) to a target position (D) to which the packet shall be transmitted;

- a transmitting means (915) for transmitting the packet from the first node (10) to the one or more selected forwarding nodes;

- a direction comparing means (916) for comparing the directions of the plurality of links of an intersection determined from the angular distribution of identified peaks (P1, P2, P3, P4) with the direction from the first node (10) towards a target position (D) for determining the respective angles between the directions of the plurality of links of the intersection and the direction from the first node (10) towards the target position (D); and
- a link selecting means (917) for selecting at least two links of the plurality of links of the intersection as forwarding links, the two links of the intersection which have the smallest angle with respect to the direction from the first node (10) towards the target position (D).

**Patentansprüche**

1. Verfahren zum Bestimmen der Verteilung von Nachbarknoten rund um einen ersten Knoten (10) in einem Kommunikationsnetz, das mehrere mobile Knoten oder mehrere mobile und ortsfeste Knoten umfasst, wobei die mobilen Knoten dazu konfiguriert sind, sich in einem Verkehrsnetz zu bewegen, das mehrere Verbindungen und Kreuzungen von Verbindungen umfasst, wobei eine Verbindung einen Abschnitt zwischen zwei Kreuzungen des Verkehrsnetzes darstellt, mit:

   - Empfangen von Bakensignalen am ersten Knoten (10), die jeweils von einem oder mehreren Nachbarknoten (21, 22, 23, 24) übertragen werden, die sich in einem Bakenbereich des ersten Knotens (10) befinden, wobei das von einem Nachbarknoten (21; 22; 23; 24) übertragene Bakensignal Identifikationsdaten, die den jeweiligen Nachbarknoten (21; 22; 23; 24) identifizieren, und Positionsdaten, die die Position des jeweiligen Nachbarknotens (21; 22; 23; 24) angeben, umfasst;
   **dadurch gekennzeichnet, dass**
   das Verfahren weiterhin umfasst:
   - Drehen eines Abtastbereichs (SA) um die Mitte eines kreisförmigen Bereichs (CA), wobei der Abtastbereich (SA) ein Teilbereich des kreisförmigen Bereichs (CA) mit dem ersten Knoten (10) in der Mitte ist und der Abtastbereich (SA) eine vorgegebene Abtastsichtform hat und sich von der Mitte des kreisförmigen Bereichs (CA) zu zumindest dem Umfang des kreisförmigen Bereichs (CA) in einer definierten radialen Richtung von der Mitte des kreisförmigen Bereichs (CA) erstreckt; und
   - Bestimmen einer Winkelverteilung von Nachbarknoten (21, 22, 23, 24), die sich im Bakenbereich des ersten Knotens (10) befinden, durch Zählen der Anzahl von Nachbarknoten (21, 22, 23, 24), die sich innerhalb des Abtastbereichs (SA) befinden, während der Abtastbereich (SA) gedreht wird, auf der Grundlage der Positionsdaten der Nachbarknoten (21, 22, 23, 24) als Funktion (N(θ)) einer radialen Richtung (θ) des Abtastbereichs (SA) von der Mitte des kreisförmigen Bereichs (CA).

2. Verfahren nach Anspruch 1, wobei
   die Bakensignale, die jeweils von den Nachbarknoten (21, 22, 23, 24) übertragen werden, weiterhin Zeitstempeldaten umfassen, die eine spezifische Zeit angeben,
   wobei die in dem Bakensignal umfassten Positionsdaten die Position des jeweiligen Nachbarknotens (21; 22; 23; 24) zu der spezifischen Zeit angeben, die von den Zeitstempeldaten angegeben wird, und
   wobei die Positionsdaten des jeweiligen Nachbarknotens (21; 22; 23; 24) aus der Berücksichtigung beim Bestimmen einer Winkelverteilung von Nachbarknoten (21, 22, 23, 24) verworfen werden, wenn ein Zeitintervall, das länger oder gleich einem vorgegebenen Zeitintervall ist, seit der von den jeweiligen Zeitstempeldaten angegebenen spezifischen Zeit verstrichen ist.

3. Verfahren nach Anspruch 2, wobei
   einer oder mehrere der Nachbarknoten (21, 22, 23, 24) regelmäßig Bakensignale mit jeweils aktualisierten Positionsdaten und aktualisierten Zeitstempeldaten übertragen,
   wobei in einem Fall, in dem der erste Knoten (10) regelmäßig mehrere Bakensignale von demselben Nachbarknoten (21; 22; 23; 24) innerhalb des vorgegebenen Zeitintervalls empfangen hat, nur die Positionsdaten des Bakensignals von demselben Nachbarknoten (21; 22; 23; 24) mit den Zeitstempeldaten, die die neueste jeweilige spezifische Zeit angeben, für das Bestimmen der Winkelverteilung von Nachbarknoten (21; 22; 23; 24) verwendet werden.

4. Verfahren nach mindestens einem der Ansprüche 1 bis 3, wobei
   der erste Knoten (10) das Drehen des Abtastbereichs (SA) und das Bestimmen der Winkelverteilung von Nachbarknoten (21, 22, 23, 24) zum Bestimmen regelmäßig aktualisierter Winkelverteilungen von Nachbarknoten (21, 22, 23, 24) regelmäßig wiederholt.

5. Verfahren nach mindestens einem der Ansprüche 1 bis 4, wobei das Verfahren weiterhin umfasst:

- Identifizieren von Spitzen (P1, P2, P3, P4) der Anzahl von Nachbarknoten (21, 22, 23, 24) in der bestimmten Winkelverteilung von Nachbarknoten (21, 22, 23, 24);
- Bestimmen einer Anzahl identifizierter Spitzen (P1, P2, P3, P4) der Anzahl von Nachbarknoten (21, 22, 23, 24) in der bestimmten Winkelverteilung von Nachbarknoten (21, 22, 23, 24) zur Bestimmung einer Anzahl von Verbindungen in der Nähe des ersten Knotens (10), indem die bestimmte Anzahl identifizierter Spitzen (P1, P2, P3, P4) mit der Anzahl von Verbindungen in der Nähe des ersten Knotens (10) gleich genommen wird;
- Bestimmen von radialen Richtungen der identifizierten Spitzen (P1, P2, P3, P4) auf der Grundlage der bestimmten Winkelverteilung von Nachbarknoten (21, 22, 23, 24); und
- Bestimmen, ob sich der erste Knoten (10) an einer Kreuzung mehrerer Verbindungen oder in einer Verbindung zwischen zwei Kreuzungen auf der Grundlage der bestimmten Anzahl identifizierter Spitzen (P1, P2, P3, P4) befindet, wobei bestimmt wird, dass sich der erste Knoten (10) an einer Kreuzung mehrerer Verbindungen befindet, wenn die bestimmte Anzahl identifizierter Spitzen (P1, P2, P3, P4) größer als zwei ist.

6. Verfahren nach Anspruch 5, wobei

in einem Fall, in dem bestimmt wird, dass sich der erste Knoten (10) in einer Verbindung zwischen zwei Kreuzungen befindet, so dass die Position des ersten Knotens (10) die Verbindung in zwei Teilverbindungen unterteilt, das Verfahren weiterhin umfasst:

- Bestimmen, welche der zwei Teilverbindungen die stromabwärtige Teilverbindung ist, die sich stromabwärts des ersten Knotens (10) befindet, wobei stromabwärts die Richtung angibt, in die sich der erste Knoten (10) bewegt, und welche der zwei Teilverbindungen die stromaufwärtige Teilverbindung ist, die sich stromaufwärts des ersten Knotens (10) befindet, wobei stromaufwärts die Richtung entgegen der Richtung angibt, in die sich der erste Knoten (10) bewegt, auf der Grundlage eines Vergleichs der Winkel zwischen der Richtung der.Schnelligkeit des ersten Knotens (10) und den Richtungen der zwei Teilverbindungen, die aus den radialen Richtungen der identifizierten Spitzen (P1, P2), die den Teilverbindungen entsprechen, bestimmt werden.

7. Verfahren nach Anspruch 5 oder 6, wobei

in einem Fall, in dem bestimmt wird, dass sich der erste Knoten (10) in einer Verbindung zwischen zwei Kreuzungen befindet, so dass die Position des ersten Knotens (10) die Verbindungen in zwei Teilverbindungen unterteilt, das Verfahren weiterhin umfasst:

- Bestimmen eines Teilverbindungswinkels, der der Winkel zwischen den Richtungen der zwei Teilverbindungen ist, auf der Grundlage des Winkels zwischen den radialen Richtungen der identifizierten Spitzen (P1, P2) in der bestimmten Winkelverteilung von Nachbarknoten (21, 22, 23, 24), die den zwei Teilverbindungen entsprechen; und

in einem Fall, in dem bestimmt wird, dass sich der erste Knoten (10) an einer Kreuzung befindet, die zumindest drei Verbindungen aufweist, die ineinander übergehen, das Verfahren weiterhin umfasst:
- Bestimmen zumindest eines Verbindungswinkels der Kreuzung, wobei der Verbindungswinkel der Winkel zwischen den Richtungen zweier benachbarter Verbindungen ist, die an der Kreuzung ineinander übergehen, auf der Grundlage des Winkels zwischen den radialen Richtungen der identifizierten Spitzen (P1, P2, P3, P4) in der bestimmten Winkelverteilung von Nachbarknoten (21, 22, 23, 24), die den an der Kreuzung ineinander übergehenden Verbindungen entsprechen.

8. Verfahren nach Anspruch 7, wobei

in einem Fall, in dem der bestimmte Teilverbindungswinkel oder einer der zumindest einen bestimmten Verbindungswinkel der Kreuzung unter einem ersten vorgegebenen Schwellwert oder über einem zweiten vorgegebenen Schwellwert liegt, der erste Knoten (10) ein Warnsignal an die Nachbarknoten (21, 22, 23, 24) sendet, um eine gefährliche Straßenbiegung oder einen gefährlichen Verbindungswinkel an einer Kreuzung anzugeben und/oder vor der gefährlichen Straßenbiegung oder dem gefährlichen Verbindungswinkel an einer Kreuzung zu warnen.

9. Verfahren nach mindestens einem der Ansprüche 1 bis 8, wobei

die von dem einen oder den mehreren Nachbarknoten (21, 22, 23, 24) empfangenen Bakensignale weiterhin Schnelligkeitsdaten umfassen, die die Geschwindigkeit und/oder die Schnelligkeitsrichtung der jeweiligen Nachbarknoten (21, 22, 23, 24) angeben,

wobei das Verfahren weiterhin umfasst:

- Bestimmen einer jeweiligen Verkehrsrichtung zumindest eines mobilen Nachbarknotens (21; 22; 23) des einen oder der mehreren Nachbarknoten (21, 22, 23, 24) um zu bestimmen, ob dieser zumindest eine mobile Nachbarknoten (21; 22; 23) sich in dieselbe Verkehrsrichtung oder eine entgegengesetzte Verkehrsrichtung im Vergleich zum ersten Knoten (10) bewegt, auf der Grundlage des Winkels zwischen der Schnelligkeitsrichtung des ersten Knotens (10) und der Schnelligkeitsrichtung des zumindest einen mobilen Nachbarknotens (21; 22; 23) oder auf der Grundlage des Winkels zwischen der Schnelligkeitsrichtung des zumindest einen mobilen Nachbarknotens (21; 22; 23) und zumindest einer der stromaufwärtigen Teilverbindungsrichtung und der stromabwärtigen Teilverbindungsrichtung, die nach Anspruch 6 bestimmt werden.

10. Verfahren nach mindestens einem der Ansprüche 1 bis 9, wobei
in einem Fall, in dem ein Paket zu einem oder mehreren Zielknoten übertragen werden soll, wobei die Zielknoten Knoten des Kommunikationsnetzes sind, das sich an einer vorgegebenen Zielposition (D) oder innerhalb einer geografischen Zielregion befindet, die von der Zielposition (D) und/oder einer Regionenform der geografischen Zielregion angegeben ist, wobei der eine oder die mehreren Zielknoten keine Nachbarknoten (21, 22, 23, 24) des ersten Knotens (10) sind, das Verfahren weiterhin umfasst:

- Auswählen von einem oder mehreren der Nachbarknoten (21, 22, 23, 24) des ersten Knotens (10) als Weiterleitungsknoten auf der Grundlage der bestimmten Winkelverteilung von Nachbarknoten (21; 22; 23; 24) und der Richtung vom ersten Knoten (10) zur Zielposition (D) hin; und
- Übertragen des Pakets vom ersten Knoten (10) zu dem einen oder den mehreren ausgewählten Weiterleitungsknoten (21, 22, 23, 24).

11. Verfahren nach Anspruch 10, wobei
in einem Fall, in dem bestimmt wird, dass sich der erste Knoten (10) an einer Verbindung zwischen zwei Kreuzungen befindet und die Zielposition (D) sich in der Richtung einer stromabwärtigen Teilverbindung befindet, wobei die stromabwärtige Teilverbindung einen Abschnitt der Verbindung zwischen dem ersten Knoten (10) und der einen der zwei Verbindungen in der Bewegungsrichtung des ersten Knotens (10) darstellt, nur einer oder mehrere Nachbarknoten (21, 22, 23, 24), die sich in der stromabwärtigen Teilverbindung befinden, als Weiterleitungsknoten ausgewählt werden,
wobei Nachbarknoten (21, 22, 23, 24), die sich in dieselbe Verkehrsrichtung wie der erste Knoten (10) bewegen, bevorzugt als Weiterleitungsknoten gegenüber Nachbarknoten (21, 22, 23, 24), die sich in die entgegengesetzte Verkehrsrichtung als der erste Knoten (10) bewegen, ausgewählt werden, und
wobei, wenn sich kein Nachbarknoten (21; 22; 23; 24) in der stromabwärtigen Teilverbindung befindet, der erste Knoten (10) das Paket speichert, bis zumindest ein Bakensignal von einem Nachbarknoten (21; 22; 23; 24), der sich in der stromabwärtigen Teilverbindung des ersten Knotens (10) befindet, so empfangen wird, dass der jeweilige Nachbarknoten (21; 22; 23; 24) als Weiterleitungsknoten ausgewählt werden kann; und
in einem Fall, in dem bestimmt wird, dass sich der erste Knoten (10) in einer Verbindung zwischen zwei Kreuzungen befindet und die Zielposition sich in der Richtung der stromaufwärtigen Teilverbindung befindet, wobei die stromaufwärtige Teilverbindung einen Abschnitt der Verbindung zwischen dem ersten Knoten (10) und der einen der zwei Kreuzungen in der Richtung entgegengesetzt zur Bewegungsrichtung des ersten Knotens (10) darstellt, nur einer oder mehrere der Nachbarknoten (21, 22, 23, 24), die sich in der stromaufwärtigen Teilverbindung befinden, als Weiterleitungsknoten ausgewählt werden,
wobei Nachbarknoten (21, 22, 23, 24), die sich in der entgegengesetzten Verkehrsrichtung als der erste Knoten (10) bewegen, bevorzugt als Weiterleitungsknoten gegenüber Nachbarknoten (21, 22, 23, 24) ausgewählt werden, die sich in dieselbe Verkehrsrichtung wie der erste Knoten (10) bewegen, und
wobei, wenn sich kein Nachbarknoten (21; 22; 23; 24) in der stromaufwärtigen Teilverbindung befindet, der erste Knoten (10) das Paket speichert, bis zumindest ein Bakensignal von einem Nachbarknoten (21; 22; 23; 24), der sich in der stromaufwärtigen Teilverbindung des ersten Knotens (10) befindet, empfangen wird, so dass der jeweilige Nachbarknoten (21; 22; 23; 24) als Weiterleitungsknoten ausgewählt werden kann und/oder bis zumindest ein Bakensignal von einem Nachbarknoten (21; 22; 23; 24), der sich in der stromabwärtigen Teilverbindung befindet und in die entgegengesetzte Verkehrsrichtung als der erste Knoten (10) bewegt, empfangen wird, so dass der jeweilige Nachbarknoten (21; 22; 23; 24) als Weiterleitungsknoten ausgewählt werden kann.

12. Verfahren nach Anspruch 10, wobei in einem Fall, in dem bestimmt wird, dass sich der erste Knoten (10) an einer Kreuzung mehrerer Verbindungen befindet, das Verfahren weiterhin umfasst:

- Vergleichen der Richtungen der mehreren Verbindungen, die aus den radialen Richtungen der entsprechenden identifizierten Spitzen (P1, P2, P3, P4) auf der Grundlage der Winkelverteilung identifizierter Spitzen (P1, P2; P3, P4) bestimmt werden, mit einer Richtung vom ersten Knoten (10) zur Zielposition (D), um den Winkel zwischen den Richtungen der mehreren Verbindungen und der Richtung vom ersten Knoten (10) zur Zielposition (D) hin zu bestimmen; und

- Auswählen zumindest zweier Verbindungen der mehreren Verbindungen der Kreuzung als Weiterleitungsverbindungen, und zwar der zwei Verbindungen der Kreuzung, die die kleinsten Winkel in Bezug auf die Richtung vom ersten Knoten (10) zur Zielposition (D) hin aufweisen;

wobei beim Auswählen eines Weiterleitungsknotens zumindest für jede der ausgewählten Weiterleitungsverbindungen zumindest ein Nachbarknoten (21; 22; 23; 24), der sich in der jeweiligen Weiterleitungsverbindung befindet, als Weiterleitungsknoten ausgewählt wird.

13. Gerät zum Bestimmen einer Verteilung von Nachbarknoten (21, 22, 23, 24) rund um einen ersten Knoten (10) in einem Kommunikationsnetz, das mehrere mobile Knoten oder mehrere mobile und ortsfeste Knoten umfasst, wobei die mobilen Knoten dazu konfiguriert sind, sich in einem Verkehrsnetz zu bewegen, das mehrere Verbindungen und Kreuzungen von Verbindungen umfasst, wobei eine Verbindung einen Abschnitt zwischen zwei Kreuzungen des Verkehrsnetzes darstellt, das dazu konfiguriert ist, das Verfahren nach mindestens einem der Ansprüche 1 bis 12 durchzuführen, mit:

- einer Empfängereinrichtung (901) zum Empfangen von Bakensignalen am ersten Knoten (10), die jeweils von einem oder mehreren Nachbarknoten (21, 22, 23, 24) übertragen werden, die sich im Bakenbereich des ersten Knotens (10) befinden, wobei das von einem Nachbarknoten (21; 22; 23; 24) übertragene Bakensignal Identifikationsdaten, die den jeweiligen Nachbarknoten (21; 22; 23; 24) identifizieren, und Positionsdaten umfasst, die die Position des jeweiligen Nachbarknotens (21; 22; 23; 24) angeben;
**dadurch gekennzeichnet, dass**
das Gerät weiterhin umfasst:
- eine Abtasteinrichtung (903) zum Drehen eines Abtastbereichs (SA) um die Mitte eines kreisförmigen Bereichs (CA), wobei der Abtastbereich (SA) ein Teilbereich des kreisförmigen Bereichs (CA) mit dem ersten Knoten (10) in der Mitte ist und wobei der Abtastbereich (SA) eine vorgegebene Abtastsichtform hat und sich von der Mitte des kreisförmigen Bereichs (CA) zu zumindest dem Umfang des kreisförmigen Bereichs (CA) in einer definierten radialen Richtung von der Mitte des kreisförmigen Bereichs (CA) erstreckt; und
- eine Verteilungsbestimmungseinrichtung (904) zum Bestimmen einer Winkelverteilung von Nachbarknoten (21, 22, 23, 24), die sich im Bakenbereich des ersten Knotens (10) befinden, durch Zählen der Anzahl von Nachbarknoten (21, 22, 23, 24), die sich innerhalb des Abtastbereichs (SA) befinden, während die Abtasteinrichtung (903) den Abtastbereich (SA) dreht, auf der Grundlage der Positionsdaten der Nachbarknoten (21, 22, 23, 24) als Funktion einer radialen Richtung des Abtastbereichs (SA) von der Mitte des kreisförmigen Bereichs (CA).

14. Gerät nach Anspruch 13, wobei das Gerät weiterhin umfasst:

- eine Spitzenidentifizierungseinrichtung (905) zum Identifizieren von Spitzen (P1, P2, P3, P4) der Anzahl von Nachbarknoten (21, 22, 23, 24) in der bestimmten Winkelverteilung von Nachbarknoten (21, 22, 23, 24);
- eine Spitzenanzahlbestimmungseinrichtung (906) zum Bestimmen einer Anzahl identifizierter Spitzen (P1, P2, P3, P4) der Anzahl von Nachbarknoten (21, 22, 23, 24) in der bestimmten Winkelverteilung von Nachbarknoten (21, 22, 23, 24) zur Bestimmung einer Anzahl von Verbindungen in der Nähe des ersten Knotens (10), indem die bestimmte Anzahl identifizierter Spitzen (P1, P2, P3, P4) mit der Anzahl von Verbindungen in der Nähe des ersten Knotens (10) gleich genommen wird;
- eine Spitzenpositionsbestimmungseinrichtung (907) zum Bestimmen von radialen Richtungen der identifizierten Spitzen (P1, P2, P3, P4) auf der Grundlage der bestimmten Winkelverteilung von Nachbarknoten (21, 22, 23, 24); und
- eine Knotenverteilungstopologie-Bestimmungseinrichtung (908) zum Bestimmen, ob sich der erste Knoten (10) an einer Kreuzung mehrerer Verbindungen oder in einer Verbindung zwischen zwei Kreuzungen befindet, auf der Grundlage der bestimmten Anzahl identifizierter Spitzen (P1, P2, P3, P4), wobei bestimmt wird, dass sich der erste Knoten (10) an einer Kreuzung mehrerer Verbindungen befindet, wenn die bestimmte Anzahl identifizierter Spitzen (P1, P2, P3, P4) größer als zwei ist.

15. Gerät nach Anspruch 13 oder 14, wobei das Gerät weiterhin umfasst:

- eine Begrenzungseinrichtung (902) zum Begrenzen des Abtastbereichs (SA);
- eine Speichereinrichtung (909) zum Speichern von Daten, die in den empfangenen Bakensignalen umfasst sind, und/oder zum Speichern eines Pakets;

- eine Teilverbindungsbestimmungseinrichtung (910) zum Bestimmen, welche von zwei Teilverbindungen einer Verbindung die stromabwärtige Teilverbindung ist, die sich stromabwärts des ersten Knotens (10) befindet, wobei stromabwärts die Richtung angibt, in die sich der erste Knoten (10) bewegt, und welche der zwei Teilverbindungen die stromaufwärtige Teilverbindung ist, die sich stromaufwärts des ersten Knotens (10) befindet, wobei stromaufwärts die Richtung entgegen der Richtung angibt, in die sich der erste Knoten (10) bewegt, auf der Grundlage eines Vergleichs der Winkel zwischen der Richtung der Schnelligkeit des ersten Knotens (10) und den jeweiligen Richtungen der zwei Teilverbindungen, die aus den radialen Richtungen der identifizierten Spitzen (P1, P2), die den Teilverbindungen entsprechen, bestimmt werden;

- eine Teilverbindungswinkelbestimmungseinrichtung (911) zum Bestimmen eines Teilverbindungswinkels, der der Winkel zwischen den Richtungen von zwei Teilverbindungen einer Verbindung ist, auf der Grundlage des Winkels zwischen den radialen Richtungen der identifizierten Spitzen (P1, P2) in der bestimmten Winkelverteilung von Nachbarknoten (21, 22, 23, 24), die den zwei Teilverbindungen entsprechen;

- eine Gefährliche-Straßenbiegungs-Erfassungseinrichtung (912) zum Erfassen einer gefährlichen Straßenbiegung in einem Fall, in dem ein bestimmter Teilverbindungswinkel unter einem ersten vorgegebenen Schwellwert oder über einem zweiten vorgegebenen Schwellwert liegt;

- eine Verkehrsrichtungsbestimmungseinrichtung (913) zum Bestimmen der Verkehrsrichtung eines mobilen Nachbarknotens (21; 22; 23) des einen oder der mehreren Nachbarknoten (21, 22, 23, 24) zum Bestimmen, ob dieser mobile Nachbarknoten (21; 22; 23) sich in dieselbe Verkehrsrichtung wie der erste Knoten (10) oder eine entgegengesetzte Verkehrsrichtung als der erste Knoten (10) bewegt, auf der Grundlage des Winkels zwischen der Schnelligkeitsrichtung des ersten Knotens (10) und der Schnelligkeitsrichtung des mobilen Nachbarknotens (21; 22; 23);

- eine Weiterleitungsknotenauswahleinrichtung (914) zum.Auswählen von einem oder mehreren der Nachbarknoten (21, 22, 23, 24) des ersten Knotens (10) als Weiterleitungsknoten auf der Grundlage der bestimmten Winkelverteilung von Nachbarknoten (21, 22, 23, 24), der bestimmten Verkehrsrichtungen und/oder einer Richtung vom ersten Knoten (10) zu einer Zielposition (D), zu der das Paket übertragen werden soll;

- eine Übertragungseinrichtung (915) zum Übertragen des Pakets vom ersten Knoten (10) zu dem einen oder den mehreren ausgewählten Weiterleitungsknoten;

- eine Richtungsvergleichseinrichtung (916) zum Vergleichen der Richtungen der mehreren Verbindungen einer Kreuzung, die aus der Winkelverteilung identifizierter Spitzen (P1, P2, P3, P4) bestimmt wird, mit der Richtung vom ersten Knoten (10) zu einer Zielposition (D), um die jeweiligen Winkel zwischen den Richtungen der mehreren Verbindungen der Kreuzung und der Richtung vom ersten Knoten (10) zur Zielposition (D) zu bestimmen; und

- eine Verbindungsauswahleinrichtung (917) zum Auswählen zumindest zweier Verbindungen der mehreren Verbindungen der Kreuzung als Weiterleitungsverbindungen, und zwar der zwei Verbindungen der Kreuzung, die den kleinsten Winkel in Bezug auf die Richtung vom ersten Knoten (10) zur Zielposition (D) aufweisen.

## Revendications

1. Procédé pour déterminer une distribution de noeuds voisins autour d'un premier noeud (10) dans un réseau de communication comportant une pluralité de noeuds mobiles ou une pluralité de noeuds mobiles et stationnaires, les noeuds mobiles étant configurés pour se déplacer dans un réseau de trafic comportant une pluralité de liaisons et d'intersections de liaison, une liaison étant une section entre deux intersections du réseau de trafic, le procédé comportant les étapes consistant à :

- recevoir, dans le premier noeud (10), des signaux de balise lesquels sont respectivement transmis depuis un ou plusieurs noeuds voisins (21 ; 22 ; 23 ; 24) positionnés dans une plage de balisage du premier noeud (10), le signal de balise transmis depuis un noeud voisin (21 ; 22 ; 23 ; 24) comportant des données d'identification lesquelles identifient le noeud voisin respectif (21 ; 22 ; 23 ; 24) et des données de position lesquelles indiquent la position du noeud voisin respectif (21 ; 22 ; 23 ; 24),

**caractérisé en ce que**

le procédé comporte en outre les étapes consistant à :

- faire tourner une zone de balayage (SA) autour du centre d'une zone circulaire (CA), la zone de balayage (SA) étant une zone partielle de la zone circulaire (CA) ayant le premier noeud (10) au centre, et la zone de balayage (SA) a une forme de flux de balayage prédéterminée et s'étend depuis le centre de la zone circulaire (CA) jusqu'à au moins la circonférence de la zone circulaire (CA) dans une direction radiale définie depuis le centre de la zone circulaire (CA), et

- déterminer une distribution angulaire de noeuds voisins (21 ; 22 ; 23 ; 24) positionnés dans la plage de balisage du premier noeud (10) en comptant le nombre de noeuds voisins (21 ; 22 ; 23 ; 24) localisés dans la zone de balayage (SA) tout en mettant en rotation la zone de balayage (SA), sur la base des données de position des noeuds voisins (21 ; 22 ; 23 ; 24), en fonction (N(θ)) d'une direction radiale (θ) de la zone de balayage (SA) depuis le centre de la zone circulaire (CA).

2. Procédé selon la revendication 1, dans lequel les signaux de balise, lesquels sont respectivement transmis depuis les noeuds voisins (21 ; 22 ; 23 ; 24) comportent en outre des données d'estampille temporelle lesquelles indiquent un instant spécifique,
dans lequel les données de position comprises dans le signal de balise indiquent la position du noeud voisin respectif (21 ; 22 ; 23 ; 24) à l'instant spécifique indiqué par les données d'estampille temporelle, et
dans lequel les données de position du noeud voisin respectif (21 ; 22 ; 23 ; 24) ne sont pas prises en compte pour déterminer une distribution angulaire de noeuds voisins (21 ; 22 ; 23 ; 24), lorsqu'un intervalle de temps supérieur ou égal à un intervalle de temps prédéterminé s'est écoulé depuis l'instant spécifique indiqué par les données d'estampille temporelle respectives.

3. Procédé selon la revendication 2, dans lequel
un ou plusieurs des noeuds voisins (21 ; 22 ; 23 ; 24) transmettent périodiquement des signaux de balise avec des données de position respectivement mises à jour et des données d'estampille temporelle mises à jour,
dans lequel dans le cas où le premier noeud (1D) a périodiquement reçu une pluralité de signaux de balise en provenance du même noeud voisin (21 ; 22 ; 23 ; 24) dans l'intervalle de temps prédéterminé, uniquement les données de position du signal de balise provenant dudit même noeud voisin (21 ; 22 ; 23 ; 24) ayant les données d'estampille temporelle qui indiquent l'instant spécifique respectif le plus récent sont utilisées pour la détermination de la distribution angulaire de noeuds voisins (21 ; 22 ; 23 ; 24).

4. Procédé selon au moins l'une des revendications 1 à 3, dans lequel
le premier noeud (10) répète périodiquement la rotation de la zone de balayage (SA) et la détermination de la distribution angulaire de noeuds voisins (21 ; 22 ; 23 ; 24) pour déterminer des distributions angulaires mises à jour périodiquement de noeuds voisins (21 ; 22 ; 23 ; 24) .

5. Procédé selon au moins l'une des revendications 1 à 4, dans lequel le procédé comporte en outre les étapes consistant à :

- identifier des pics (P1, P2, P3, P4) du nombre de noeuds voisins (21 ; 22 ; 23 ; 24) dans la distribution angulaire déterminée de noeuds voisins (21 ; 22 ; 23 ; 24),
- déterminer un nombre de pics identifiés (P1, P2, P3, P4) du nombre de noeuds voisins (21 ; 22 ; 23 ; 24) dans la distribution angulaire déterminée de noeuds voisins (21 ; 22 ; 23 ; 24) pour déterminer un nombre de liaisons à proximité du premier noeud (10) en faisant en sorte que le nombre déterminé de pics identifiés (P1, P2, P3, P4) soit égal au nombre de liaisons à proximité du premier noeud (10),
- déterminer des directions radiales des pics identifiés (P1, P2, P3, P4) sur la base de la distribution angulaire déterminée de noeuds voisins (21 ; 22 ; 23 ; 24) ; et
- déterminer si le premier noeud (10) est positionné au niveau d'une intersection d'une pluralité de liaisons ou dans une liaison entre deux intersections sur la base du nombre déterminé de pics identifiés (P1, P2, P3, P4), dans lequel il est déterminé que le premier noeud (10) est positionné au niveau d'une intersection d'une pluralité de liaisons si le nombre déterminé de pics identifiés (P1, P2, P3, P4) est supérieur à deux.

6. Procédé selon la revendication 5, dans lequel
dans le cas où il est déterminé que le premier noeud (10) est positionné dans une liaison entre deux intersections de sorte que la position du premier noeud (10) divise la liaison en deux sous liaisons, le procédé comporte en outre l'étape consistant à :

- déterminer, laquelle des deux sous liaisons est la sous liaison aval positionnée en aval du premier noeud (10), dans lequel l'aval indique la direction dans laquelle le premier noeud (10) se déplace, et laquelle des deux sous liaisons est la sous liaison amont positionnée en amont du premier noeud (10), dans lequel l'amont indique la direction opposée à la direction dans laquelle le premier noeud (10) déplace, sur la base d'une comparaison des angles entre la direction de la vitesse du premier noeud (10) et les directions des deux sous liaisons déterminées à partir des directions radiales des pics identifiés (P1, P2) correspondant aux sous liaisons.

7. Procédé selon la revendication 5 ou 6, dans lequel

dans le cas où il est déterminé que le premier noeud (10) est positionné dans une liaison entre deux intersections de sorte que la position du premier noeud (10) divise la liaison en deux sous liaisons, le procédé comporte en outre l'étape consistant à :

- déterminer un angle de sous liaison, lequel est l'angle entre les directions des deux sous liaisons, sur la base de l'angle entre les directions radiales des pics identifiés (P1, P2) dans la distribution angulaire déterminée de noeuds voisins (21 ; 22 ; 23 ; 24) qui correspondent aux deux sous liaisons, et

dans le cas où il est déterminé que le premier noeud (10) est positionné au niveau d'une intersection ayant au moins trois liaisons fusionnant entre elles, le procédé comporte en outre l'étape consistant à :

- déterminer au moins un angle de liaison de l'intersection, l'angle de liaison étant l'angle entre les directions de deux liaisons adjacentes qui fusionnent au niveau de l'intersection, sur la base de l'angle entre les directions radiales des pics identifiés (P1, P2, P3, P4) dans la distribution angulaire déterminée de noeuds voisins (21 ; 22 ; 23 ; 24) qui correspondent aux liaisons fusionnant au niveau de l'intersection.

8. Procédé selon la revendication 7, dans lequel
dans le cas où l'angle de sous liaison déterminé ou l'un du au moins un angle de liaison déterminé de l'intersection se situe au-dessous d'une première valeur de seuil prédéterminée ou au-dessus d'une seconde valeur de seuil prédéterminée, le premier noeud (10) transmet un signal d'avertissement aux noeuds voisins (21 ; 22 ; 23 ; 24) pour indiquer un virage dangereux ou un angle de liaison dangereux au niveau d'une intersection et/ou pour avertir du virage dangereux ou de l'angle de liaison dangereux au niveau d'une intersection.

9. Procédé selon au moins l'une des revendications 1 à 8, dans lequel
les signaux de balise reçus en provenance d'un ou plusieurs noeuds voisins (21 ; 22 ; 23 ; 24) comportent en outre des données de vitesse indiquant la vitesse et/ou la direction de vitesse des noeuds voisins respectifs (21 ; 22 ; 23 ; 24),
dans lequel le procédé comporte en outre l'étape consistant à :

- déterminer une direction de trafic respective d'au moins un noeud voisin mobile (21 ; 22 ; 23) d'un ou plusieurs noeuds voisins (21 ; 22 ; 23 ; 24) pour déterminer, si ledit au moins un noeud voisin mobile (21 ; 22 ; 23) se déplace dans une même direction de trafic ou une direction de trafic opposée par rapport au premier noeud (10) sur la base de l'angle entre la direction de vitesse du premier noeud (10) et la direction de vitesse d'au moins un noeud voisin mobile (21 ; 22 ; 23) ou sur la base de l'angle entre la direction de vitesse du au moins un noeud voisin mobile (21 ; 22 ; 23) et au moins une de la direction de sous liaison amont et de la direction de sous liaison aval déterminée conformément à la revendication 6.

10. Procédé selon au moins l'une des revendications 1 à 9, dans lequel
dans le cas où un paquet doit être transmis à un ou plusieurs noeuds cibles, les noeuds cibles étant des noeuds du réseau de communication localisés à une position cible prédéterminée (D) ou localisés dans une région géographique cible indiquée par la position cible (D) et/ou une forme de région de la région géographique cible, dans lequel le noeud ou les noeuds cibles ne sont pas des noeuds voisins (21 ; 22 ; 23 ; 24) du premier noeud (10), le procédé comporte en outre les étapes consistant à :

- sélectionner un ou plusieurs des noeuds voisins (21 ; 22 ; 23 ; 24) du premier noeud (10) en tant que noeuds d'acheminement basés sur la distribution angulaire déterminée de noeuds voisins (21 ; 22 ; 23 ; 24) et la direction depuis le premier noeud (10) vers la position cible (D), et
- transmettre le paquet depuis le premier noeud (10) à un ou plusieurs noeuds d'acheminement sélectionnés (21 ; 22 ; 23 ; 24) .

11. Procédé selon la revendication 10, dans lequel
dans le cas où le premier noeud (10) est déterminé pour être positionné au niveau d'une liaison entre deux intersections et la position cible (D) est localisée dans la direction d'une sous liaison aval, dans lequel la sous liaison aval est une partie de la liaison entre le premier noeud (10) est l'une des deux intersections dans la direction de déplacement du premier noeud (10), uniquement un ou plusieurs noeuds voisins (21 ; 22 ; 23 ; 24) lesquels sont localisés dans la sous liaison aval sont choisis en tant que noeuds d'acheminement,
dans lequel les noeuds voisins (21 ; 22 ; 23 ; 24) se déplaçant dans la même direction de trafic que le premier noeud (10) sont sélectionnés de préférence en tant que noeuds d'acheminement sur des noeuds voisins (21 ; 22 ; 23 ;

24) se déplaçant dans la direction de trafic opposée à celle du premier noeud (10), et

dans lequel, lorsque aucun noeud voisin (21 ; 22 ; 23 ; 24) n'est positionné dans la sous liaison aval, le premier noeud (10) mémorise le paquet jusqu'à ce que au moins un signal de balise en provenance d'un noeud voisin (21 ; 22 ; 23 ; 24) localisé dans la sous liaison aval du premier noeud (10) soit reçu de sorte que le noeud voisin respectif (21 ; 22 ; 23 ; 24) peut être sélectionné en tant que noeud d'acheminement, et

dans le cas où le premier noeud (10) est déterminé pour être localisé dans une liaison entre deux intersections et la position cible est localisée dans la direction de la sous liaison amont, la sous liaison amont étant une partie de la liaison entre le premier noeud (10) et l'une des deux intersections dans la direction opposée à la direction de déplacement du premier noeud (10), uniquement un ou plusieurs noeuds voisins (21 ; 22 ; 23 ; 24) lesquels sont localisés dans la sous liaison amont sont choisis en tant que noeuds d'acheminement,

dans lequel des noeuds voisins (21 ; 22 ; 23 ; 24) se déplaçant dans la direction de trafic opposée à celle du premier noeud (10) sont sélectionnés de préférence en tant que noeuds d'acheminement sur des noeuds voisins (21 ; 22 ; 23 ; 24) se déplaçant dans la même direction de trafic que le premier noeud (10), et

dans lequel, lorsqu'aucun noeud voisin (21 ; 22 ; 23 ; 24) n'est positionné dans la sous liaison amont, le premier noeud (10) mémorise le paquet jusqu'à ce que au moins un signal de balise depuis un noeud voisin (21 ; 22 ; 23 ; 24) localisé dans la sous liaison amont du premier noeud (10) soit reçu de sorte que le noeud voisin respectif (21 ; 22 ; 23 ; 24) peut être sélectionné en tant que noeud d'acheminement et/ou jusqu'à ce qu'au moins un signal de balise en provenance d'un noeud voisin (21 ; 22 ; 23 ; 24) positionné dans la sous liaison aval et se déplaçant dans la direction de trafic opposée à celle du premier noeud (10) soit reçu de sorte que le noeud voisin respectif (21 ; 22 ; 23 ; 24) peut être sélectionné en tant que noeud d'acheminement.

12. Procédé selon la revendication 10, dans lequel dans le cas où le premier noeud (10) est déterminé comme étant positionné au niveau d'une intersection d'une pluralité de liaisons, le procédé comporte en outre les étapes consistant à :

- comparer les directions de la pluralité de liaisons déterminées à partir des directions radiales des pics identifiés correspondants (P1, P2, P3, P4) sur la base de la distribution angulaire de pics identifiés (P1, P2, P3, P4) avec une direction depuis le premier noeud (10) vers la position cible (D) pour déterminer les angles entre les directions de la pluralité de liaisons et la direction depuis le premier noeud (10) vers la position cible (D), et
- sélectionner au moins deux liaisons parmi la pluralité de liaisons de l'intersection en tant que liaisons d'acheminement, les deux liaisons de l'intersection qui ont les angles les plus petits par rapport à la direction depuis le premier noeud (10) vers la position cible (D),

dans lequel lors de la sélection d'un noeud d'acheminement, au moins pour chacune des liaisons d'acheminement sélectionnées, au moins un noeud voisin (21 ; 22 ; 23 ; 24) positionné dans la liaison d'acheminement respective est sélectionné en tant que noeud d'acheminement.

13. Dispositif pour déterminer une distribution de noeuds voisins (21 ; 22 ; 23 ; 24) autour d'un premier noeud (10) dans un réseau de communication comportant une pluralité de noeuds mobiles ou une pluralité de noeuds mobiles et stationnaires, les noeuds mobiles étant configurés pour se déplacer dans un réseau de trafic comportant une pluralité de liaisons et d'intersections de liaisons, une liaison étant une section entre deux intersections du réseau de trafic, configuré pour mettre en oeuvre le procédé conformément à au moins l'une des revendications 1 à 12, comportant :

- des moyens de réception (901) pour recevoir, dans le premier noeud (10), des signaux de balise lesquels sont respectivement transmis depuis un ou plusieurs noeuds voisins (21 ; 22 ; 23 ; 24) localisés dans la plage de balisage du premier noeud (21 ; 22 ; 23 ; 24),

dans lequel le signal de balise transmis depuis un noeud voisin (21 ; 22 ; 23 ; 24) comporte des données d'identification lesquelles identifient le noeud voisin respectif (21 ; 22 ; 23 ; 24) et des données de position lesquelles indiquent la position du noeud voisin respectif (21 ; 22 ; 23 ; 24),

**caractérisé en ce que**

le dispositif comporte en outre :

- des moyens de balayage (903) pour mettre en rotation une zone de balayage (SA) autour du centre d'une zone circulaire (CA), la zone de balayage (SA) étant une zone partielle de la zone circulaire (CA) ayant le premier noeud (10) au centre, et la zone de balayage (SA) ayant une forme de vue de balayage prédéterminée et s'étendant depuis le centre de la zone circulaire (CA) jusqu'à au moins la circonférence de la zone circulaire (CA) dans une direction radiale définie depuis le centre de la zone circulaire (CA), et

- des moyens de détermination de distribution (904) pour déterminer une distribution angulaire de noeuds voisins (21 ; 22 ; 23 ; 24) localisés dans la plage de balisage du premier noeud (10) en comptant le nombre de noeuds voisins (21 ; 22 ; 23 ; 24) localisés dans la zone de balayage (SA) alors que les moyens de balayage (903) mettent en rotation la zone de balayage (SA), sur la base des données de position des noeuds voisins (21 ; 22 ; 23 ; 24) en fonction d'une direction radiale de la zone de balayage (SA) depuis le centre de la zone circulaire (CA).

14. Dispositif selon la revendication 13, dans lequel le dispositif comporte en outre :

- des moyens d'identification de pics (905) pour identifier des pics (P1, P2, P3, P4) du nombre de noeuds voisins (21 ; 22 ; 23 ; 24) dans la distribution angulaire déterminée de noeuds voisins (21 ; 22 ; 23 ; 24) ,
- des moyens de détermination de nombre de pics (906) pour déterminer un nombre de pics identifiés (P1, P2, P3, P4) dans la distribution angulaire déterminée de noeuds voisins (21 ; 22 ; 23 ; 24) afin de déterminer un nombre de liaisons à proximité du premier noeud (10) en faisant en sorte que le nombre déterminé de pics identifiés (P1, P2, P3, P4) soit égal au nombre de liaisons à proximité du premier noeud (10),
- des moyens de détermination de position de pics (907) pour déterminer des directions radiales des pics identifiés (P1, P2, P3, P4) sur la base de la distribution angulaire déterminée de noeuds voisins (21 ; 22 ; 23 ; 24), et
- des moyens de détermination de topologie de distribution de noeuds (908) pour déterminer si le premier noeud (10) est positionné au niveau d'une intersection d'une pluralité de liaisons ou dans une liaison entre deux intersections sur la base du nombre déterminé de pics identifiés (P1, P2, P3, P4), dans lequel il est déterminé que le premier noeud (10) est positionné au niveau d'une intersection d'une pluralité de liaisons si le nombre déterminé de pics identifiés (P1, P2, P3, P4) est supérieur à deux.

15. Dispositif selon la revendication 13 ou 14, dans lequel le dispositif comporte en outre :

- des moyens de définition (902) pour définir la zone de balayage (SA),
- des moyens de mémorisation (909) pour mémoriser des données comprises dans les signaux de balise reçues et/ou mémoriser un paquet,
- des moyens de détermination de sous liaison (910) pour déterminer laquelle parmi deux sous liaisons d'une liaison est la sous liaison aval localisée en aval du premier noeud (10), dans lequel l'aval indique la direction dans laquelle le premier noeud (10) se déplace, et laquelle des deux sous liaisons est la sous liaison amont localisée en amont du premier noeud (10), dans lequel l'amont indique la direction opposée à la direction dans laquelle le premier noeud (10) se déplace, sur la base d'une comparaison des angles entre la direction de la vitesse du premier noeud (10) et les directions respectives des deux sous liaisons déterminées à partir des directions radiales des pics identifiés (P1, P2) correspondant aux sous liaisons,
- des moyens de détermination d'angle de sous liaison (911) pour déterminer un angle de sous liaison, lequel est l'angle entre les directions des deux sous liaisons d'une liaison, sur la base de l'angle entre les directions radiales des pics identifiés (P1, P2) dans la distribution angulaire déterminée de noeuds voisins (21 ; 22 ; 23 ; 24) qui correspondent aux deux sous liaisons,
- des moyens de détection de virage dangereux (912) pour détecter un virage dangereux dans le cas où un angle de sous liaison déterminé se situe au-dessous d'une première valeur de seuil prédéterminée ou au-dessus d'une seconde valeur de seuil prédéterminée,
- des moyens de détermination de direction de trafic (913) pour déterminer la direction de trafic d'un noeud voisin mobile (21 ; 22 ; 23) d'un ou plusieurs noeuds voisins (21 ; 22 ; 23 ; 24) pour déterminer, si ledit noeud voisin mobile (21 ; 22 ; 23) se déplace dans une même direction de trafic que le premier noeud (10) ou une direction de trafic opposée à celle du premier noeud (10) sur la base de l'angle entre la direction de vitesse du premier noeud (10) et la direction de vitesse du noeud voisin mobile (21 ; 22 ; 23),
- des moyens de sélection de noeud d'acheminement (914) pour sélectionner un ou plusieurs des noeuds d'acheminement (21 ; 22 ; 23 ; 24) du premier noeud (10) en tant que noeud d'acheminement sur la base de la distribution angulaire déterminée de noeuds voisins (21 ; 22 ; 23 ; 24), les directions de trafic déterminées et/ou une direction depuis le premier noeud (10) jusqu'à une position cible (D) à laquelle le paquet doit être transmis,
- des moyens de transmission (915) pour transmettent le paquet depuis le premier noeud (10) à un ou plusieurs des noeuds d'acheminement sélectionnés,
- des moyens de comparaison de direction (916) pour comparer les directions de la pluralité de liaisons d'une intersection déterminée depuis la distribution angulaire de pics identifiés (P1, P2, P3, P4) à la direction du premier noeud (10) vers une position cible (D) pour déterminer les angles respectifs entre les directions de la pluralité de liaisons de l'intersection et la direction depuis le premier noeud (10) vers la position cible (D), et
- des moyens de sélection de liaison (917) pour sélectionner au moins deux liaisons parmi la pluralité de liaisons de l'intersection en tant que liaisons d'acheminement, les deux liaisons de l'intersection qui ont l'angle le plus petit par rapport à la direction du premier noeud (10) vers la position cible (D).

# FIG 1
Prior Art

# FIG 2
Prior Art

Building

FIG 3

**FIG 4**

START

S101 → RECEIVING BEACON SIGNALS FROM NEIGHBOUR NODES

S102 → ROTATING THE SCAN AREA BY 360 DEGREES

S103 → DETERMINING AN ANGULAR DISTRIBUTION OF NEIGHBOUR NODES

RETURN TO START

## FIG 5A

## FIG 5B

FIG 6

EP 2 203 004 B1

## FIG 7

START

S101 — RECEIVING BEACON SIGNALS FROM NEIGHBOUR NODES

S102 — ROTATING THE SCAN AREA BY 360 DEGREES

S103 — DETERMINING AN ANGULAR DISTRIBUTION OF NEIGHBOUR NODES

S104 — IDENTIFYING THE PEAKS OF THE NUMBER OF NEIGHBOUR NODES

S105 — DETERMINING A NUMBER OF IDENTIFIED PEAKS

S106 — DETERMINING RADIAL DIRECTIONS OF THE IDENTIFIED PEAKS

S107 — DETERMINING IF THE NODE IS LOCATED AT AN INTERSECTION

RETURN TO START

## FIG 8A

## FIG 8B

# FIG 8C

## FIG 9A

## FIG 9B

## FIG 10

START

S101 → RECEIVING BEACON SIGNALS FROM NEIGHBOUR NODES

S102 → ROTATING THE SCAN AREA BY 360 DEGREES

S103 → DETERMINING AN ANGULAR DISTRIBUTION OF NEIGHBOUR NODES

S104 → IDENTIFYING THE PEAKS OF THE NUMBER OF NEIGHBOUR NODES

S105 → DETERMINING A NUMBER OF IDENTIFIED PEAKS

S106 → DETERMINING RADIAL DIRECTIONS OF THE IDENTIFIED PEAKS

PACKET TO BE FORWARDED?

NO

YES

S107 → DETERMINING IF THE NODE IS LOCATED AT AN INTERSECTION

INTERSECTION?    NO    S108

YES

COMPARING DIRECTIONS OF LINKS WITH DIRECTION TOWARDS TARGET POSITION AND SELECTING FORWARDING LINKS    S111

DETERMINING UPSTREAM AND DOWNSTREAM SUB LINKS

DETERMINING TRAFFIC DIRECTION OF NEIGHBOUR NODES

S112 → SELECTING FORWARDING NODES    S109

FORWARDING NODE SELECTED?

YES    NO

TRANSMITTING THE PACKET TO SELECTED FORWARDING NODES    S113

STORE THE PACKET

RETURN TO START

# FIG 11

FIG 12                                                    900

| TRANSMITTING MEANS | 915 | RECEIVER MEANS | 901 | SCANNING MEANS | 903 | DISTRIBUTION DETERMINING MEANS | 904 |

| FORWARDING NODE SELECTING MEANS | 914 | STORAGE MEANS | 909 | DANGEROUS TURN DETECTING MEANS | 912 | PEAK IDENTIFYING MEANS | 905 |

| LINK SELECTING MEANS | 917 | TRAFFIC DIRECTION DETECTING MEANS | 913 | SUB LINK ANGLE DETERMINING MEANS | 911 | PEAK POSITION DETERMINING MEANS | 907 |

| DIRECTION COMPARING MEANS | 916 | SUB LINK DETERMINING MEANS | 910 | NODE DISTRIBUTION TOPOLOGY DETERMINING MEANS | 908 | PEAK NUMBER DETERMINING MEANS | 906 |

EP 2 203 004 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20070198140 A1

- US 2008194204 A1

### Non-patent literature cited in the description

- **Jing Zhao ; Guohong Cao.** VADD: Vehicle-Assisted Data Delivery in vehicular ad-hoc networks. *INFOCOM 2006, 25th IEEE International Conference on Computer Communications, Proceedings,* April 2006, 1-12
- *Vehicular Technology, IEEE Transactions,* May 2008, vol. 57 (3), 1910-1922

- **C. Lochert et al.** Geographic Routing in City Scenarios. *ACM SIGMOBILE Mobile Computing and Communications Review (MC2R),* January 2005, vol. 9 (1), 69-72
- **C. Lochert et al.** *Geographic Routing in City Scenarios*